(19) Europäisches Patentamt
European Patent Office
Office européen des brevets

(11) EP 1 840 871 B1

(12) **EUROPEAN PATENT SPECIFICATION**

(45) Date of publication and mention of the grant of the patent:
**12.07.2017 Bulletin 2017/28**

(21) Application number: **05842258.5**

(22) Date of filing: **26.12.2005**

(51) Int Cl.:
***G10L 19/02*** *(2013.01)* ***G10L 21/04*** *(2013.01)*

(86) International application number:
**PCT/JP2005/023828**

(87) International publication number:
**WO 2006/070768 (06.07.2006 Gazette 2006/27)**

(54) **AUDIO WAVEFORM PROCESSING DEVICE, METHOD, AND PROGRAM**

VORRICHTUNG, VERFAHREN UND PROGRAMM ZUR AUDIOWELLENFORMVERARBEITUNG

DISPOSITIF, PROCEDE ET PROGRAMME DE TRAITEMENT DE LA FORME D'ONDE AUDIO

(84) Designated Contracting States:
**DE GB**

(30) Priority: **27.12.2004 JP 2004382895**

(43) Date of publication of application:
**03.10.2007 Bulletin 2007/40**

(73) Proprietor: **P Softhouse Co. Ltd.**
**Miyagino-ku**
**Sendai-shi, Miyagi 9830852 (JP)**

(72) Inventor: **KUDOH, Takuma**
**Sendai-shi, Miyagi 9830852 (JP)**

(74) Representative: **Hoffmann Eitle**
**Patent- und Rechtsanwälte PartmbB**
**Arabellastraße 30**
**81925 München (DE)**

(56) References cited:
**WO-A1-03/036620**
**JP-A- 05 297 895**
**JP-A- 2000 003 199**
**JP-A- 2000 010 597**
**JP-A- 2001 117 595**
**JP-A- 2003 022 100**
**US-A1- 2002 071 575**

- **BORCHERS J O ET AL: "Personal orchestra: conducting audio/video music recordings" WEB DELIVERING OF MUSIC, 2002. WEDELMUSIC 2002. PROCEEDINGS. SECOND IN TERNATIONAL CONFERENCE ON 9-11 DEC. 2002, PISCATAWAY, NJ, USA,IEEE, 9 December 2002 (2002-12-09), pages 93-100, XP010626949 ISBN: 978-0-7695-1623-3**
- **LAROCHE J: "Autocorrelation method for high-quality time/pitch-scaling" APPLICATIONS OF SIGNAL PROCESSING TO AUDIO AND ACOUSTICS, 1993. FINAL PROGRAM AND PAPER SUMMARIES., 1993 IEEE WORKSHOP ON NEW PALTZ, NY, USA 17-20 OCT. 1993, NEW YORK, NY, USA,IEEE, 17 October 1993 (1993-10-17), pages 131-134, XP010130061 ISBN: 978-0-7803-2078-9**
- **YUEN J ET AL: "HYBRID SAMPLING-WAVETABLE SYNTHESIS WITH GENETIC ALGORITHMS" JOURNAL OF THE AUDIO ENGINEERING SOCIETY, AUDIO ENGINEERING SOCIETY, NEW YORK, NY, US, vol. 45, no. 5, 1 May 1997 (1997-05-01), pages 316-330, XP000700664 ISSN: 1549-4950**

EP 1 840 871 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to audio waveform processing for performing time stretching and pitch shifting by a vocoder method.

BACKGROUND ART

Time stretching is a process of expanding and compressing only a time axis of an audio waveform without changing a pitch thereof. Pitch shifting is a process of changing only the pitch without changing the time axis. There is a so-called vocoder method as a heretofore known audio waveform processing for performing the time stretching and the pitch shifting (refer to Patent Document 1 for instance). This method analyzes a frequency of an inputted audio waveform, compresses or expands the time axis on the time stretching, and scales the frequency of an outputted waveform and then adds each frequency component on the pitch shifting.

In the case of a conventional vocoder method, there is a great change in a phase between an audio input waveform and a time-stretched and/or pitch-shifted waveform. FIGS. 7A and 7B show the change in the phase generated when time-stretching a certain 2-channel stereo audio waveform as an example. A horizontal axis of a graph represents the time axis, and a vertical axis represents the phase of the frequency component. FIG. 7A shows phase changes of components A and B in a frequency band having two channels obtained as a result of frequency analysis of the audio input waveform. FIG. 7B shows phases of A1 and B1 corresponding to A and B obtained when the waveform of FIG. 7A is time-compressed to 1/2 by the vocoder method. The time axis becomes 1/2 times, and the vertical axis representing the phase also becomes 1/2 times.

Here, attention is focused on time T before the stretch process and time T1 (= T/2) after the time compression. In the graph of FIG. 7A before the process, a phase difference between A and B at the time T is $2\pi$, and hence the phase difference is 0 if expressed as $-\pi$ to $\pi$. The components A and B undergo a transition with the phase difference of 0 even after the time T. The phase difference between A1 and B1 at the time T1 after the time compression is n, and A1 and B1 undergo a transition with the phase difference $\pi$ even after the time T1. Thus, the phase relation between A1 and B1 has apparently changed from that of A and B before the time compression.

As is evident from the above description, the vocoder method expands and compresses the time axis so that a lag or a lead of the phase occurs by the amount of expansion and compression. This also applies to the pitch shifting. A phase change amount is different among the frequency components having undergone the frequency analysis, and is also different among the channels in the case of a stereo audio. For this reason, there arises an auditory sense of discomfort due to, for example, mutual cancellation of sounds or a lack of feeling of normalcy of a stereo sound. Therefore, the time stretching and the pitch shifting of high quality cannot be realized.

The techniques for improving the vocoder method and improving sound quality have also been proposed. For instance, Patent Document 1 discloses an audio waveform device wherein attention is focused on a pre-echo generated on performing band division in an attack portion, in which a level of the audio waveform greatly changes, and the phase is reset at the beginning of a section of the pre-echo. Borchers et al: "Personal orchestra: conducting audio/video music recordings" discloses time and pitch scaling in a sine wave framework. It uses a cross-fade process to avoid artefacts arising from phase mismatch. Patent Document 1: Japanese Patent Application Laid-Open No. 2001-117595

DISCLOSURE OF INVENTION

PROBLEM TO BE SOLVED BY THE INVENTION

However, the audio waveform device disclosed in Patent Document 1 was made in view of keeping an attack feeling, and no notice is taken of the phase change after the attack. There is also a problem that it is difficult to detect the attack portion as to a complicatedly mixed tune.

The present invention relates to the audio waveform processing for performing the time stretching and the pitch shifting by the vocoder method, and an object thereof is to realize audio waveform processing of high quality which does not cause auditory sense of discomfort, and which reduces the phase change invariably occurring in the vocoder method through the entire waveform.

MEANS FOR SOLVING PROBLEM

To attain the object, an audio waveform processing device, a method, and a program thereof according to the present invention handle an audio input waveform as-is.as one band (the band refers to a frequency band, and the frequency band is hereinafter referred to as the band) or divide it into multiple bands by the frequency band, synthesize the waveform while performing time expansion/compression and pitch conversion to each band waveform as with the conventional vocoder method, and perform phase synchronization processing to a synthesized waveform of each band at regular intervals so as to reduce the phase change. Furthermore, the waveforms of respective bands after the phase synchronization processing are added to be a final output waveform.

The invention is set forth by device claim 1, method claim 3 and computer program claim 5.

The phase synchronization processing of the present invention is to evaluate similarities of the synthesized waveform having undergone the time expansion/compression and the pitch conversion in each band to its original band waveform by shifting time series and to perform the cross-fade process on a location determined to be highly similar so as to turn the synthesized waveform back to the original band waveform. As a result thereof, the waveform at a time point when the phase synchronization processing is finished, that is the time point when the cross-fade process is finished is in the same phase condition as the original band waveform. Evaluation of the similarities is intended to lessen discontinuities caused by the cross-fade process and to obtain the waveform which does not cause an auditory sense of discomfort.

FIGS. 8A and 8B show the effects of the phase synchronization processing. FIG. 8A shows the phase condition of the same audio input waveform as FIG. 7A. In FIG. 8B, the waveform of FIG. 8A is time-compressed to 1/2 while the phase synchronization processing is performed at time T1 (= T/2). Reference characters A2 and B2 denote phases of frequency components corresponding to A and B of FIG. 8A respectively.

As for the time compression by the conventional vocoder method shown in FIGS. 7A and 7B, a phase relation between A1 and B1 at time T1 has changed from its original form. As is evident in FIGS. 8A and 8B, however, the phase of A2 is $6.5\pi$ and the phase of B2 is $8.5\pi$ at the time T1 when the phase synchronization processing is performed. It can be seen that the difference is $2\pi$ and so there is no longer the phase difference so that the same phase relation as that between the original A and B is kept.

As is evident from the above description, the phase relation of the original waveform is kept by the phase synchronization processing to the synthesized waveform having undergone time stretch and pitch shift processing by the vocoder method. The phase synchronization processing is performed at regular intervals so that the phase relation of the original waveform is kept each time, which consequently allows the time stretch and pitch shift processing to eliminate auditory sense of discomfort with the phase change reduced through the entire waveform.

## EFFECT OF THE INVENTION

The effect of using the audio waveform processing device, method, and program of the present invention is that, whether the audio input waveform is monaural or stereo, the phase change invariably occurring in the conventional vocoder method is reduced through the entire waveform so that the time stretch and pitch shift processing of high quality can be realized.

## BRIEF DESCRIPTION OF DRAWINGS

FIG. 1 is a block diagram showing a waveform processing flow according to the present invention;
FIG. 2 is a block diagram for describing details of a band component synthesizing unit;
FIG. 3 is a block diagram for describing details of a phase synchronization processing unit;
FIGS. 4A, 4B, and 4C are diagrams for describing a reference waveform generation;
FIG. 5 is a diagram for describing a concept of phase synchronization processing;
FIG. 6 is a diagram showing an audio signal processing device as an embodiment according to the present invention;
FIGS. 7A and 7B are diagrams for describing an appearance of a phase change according to a conventional vocoder method;
FIGS. 8A and 8B are diagrams for describing effects of the phase synchronization processing according to the present invention;
FIG. 9 is a block diagram showing a waveform processing flow according to the present invention;
FIG. 10 is a block diagram for describing details of the band component synthesizing unit;
FIG. 11 is a block diagram for describing details of the phase synchronization processing unit;
FIG. 12 is a diagram for describing details of a channel division processing unit;
FIG. 13 is a diagram for describing information stored in a memory by a frequency analysis unit;
FIG. 14 is a diagram for describing time stretch and pitch shift processing;
FIG. 15 is a diagram for describing details of a channel integration processing unit;
FIG. 16 is a diagram for describing memory usage of a buffering processing unit;

FIG. 17 is a diagram for describing a data flow of reference waveform generation;
FIG. 18 is a block diagram for describing details of evaluation of a waveform similarity evaluation unit;
FIG. 19 is a block diagram for describing details of a cross-fade process;
FIG. 20 is a flowchart for describing a computer program of the present invention;
FIG. 21 is a diagram for describing details of a channel division processing unit;
FIG. 22 is a diagram for describing the time stretch and pitch shift processing;
FIG. 23 is a diagram for describing details of the channel integration processing unit;
FIG. 24 is a block diagram for describing a method of acquiring an evaluated value of a phase difference by using an evaluation function;
FIG. 25 is a block diagrams for describing details of evaluation of the waveform similarity evaluation unit; and
FIG. 26 is a block diagram for describing details of the cross-fade process.

EXPLANATIONS OF LETTERS OR NUMERALS

1 AUDIO INPUT WAVEFORM

2 FREQUENCY BAND DIVIDING UNIT
3 TIME STRETCH / PITCH SHIFT AMOUNT SETTING UNIT
4 BAND COMPONENT SYNTHESIZING UNIT
5 PHASE SYNCHRONIZATION PROCESSING UNIT
6 AUDIO OUTPUT WAVEFORM
7 TIME STRETCH AMOUNT CORRECTING UNIT
8 CHANNEL DIVISION PROCESSING UNIT
9 FREQUENCY ANALYSIS UNIT
10 TIME STRETCH / PITCH SHIFT PROCESSING UNIT
11 CHANNEL INTEGRATION PROCESSING UNIT
12 BUFFERING PROCESSING UNIT
13 REFERENCE WAVEFORM GENERATING UNIT
14 WAVEFORM SIMILARITY EVALUATION UNIT
15 CROSS-FADE PROCESSING UNIT
16 CPU (CENTRAL PROCESSING UNIT)
17 ROM (READ ONLY MEMORY)
18 RAM (RANDOM ACCESS MEMORY)
19 HARD DISK DRIVE
20 CD-ROM DRIVE
21 SPEECH OUTPUT UNIT
22 CONTROLLER GROUP
23 AUDIO INPUT WAVEFORM
24 FREQUENCY BAND DIVIDING UNIT
25 TIME STRETCH / PITCH SHIFT AMOUNT SETTING UNIT
26 BAND COMPONENT SYNTHESIZING UNIT
27 PHASE SYNCHRONIZATION PROCESSING UNIT
28 AUDIO OUTPUT WAVEFORM
29 CHANNEL DIVISION PROCESSING UNIT
30 FREQUENCY ANALYSIS UNIT
31 TIME STRETCH / PITCH SHIFT PROCESSING UNIT
32 CHANNEL INTEGRATION PROCESSING UNIT
33 BUFFERING PROCESSING UNIT
34 PHASE SYNCHRONIZATION WAVEFORM GENERATING UNIT
35 CROSS-FADE PROCESSING UNIT
36 STEREO WAVEFORM MEMORY
37 CHANNEL 0 WAVEFORM MEMORY
38 CHANNEL 1 WAVEFORM MEMORY
39 CHANNEL 0 SYNTHESIZED WAVEFORM MEMORY
40 CHANNEL 1 SYNTHESIZED WAVEFORM MEMORY
41 STEREO SYNTHESIZED WAVEFORM MEMORY

42 STEREO WAVEFORM MEMORY
43 CHANNEL 0 WAVEFORM MEMORY
44 CHANNEL 1 WAVEFORM MEMORY
45 CHANNEL 0 SYNTHESIZED WAVEFORM MEMORY
46 CHANNEL 1 SYNTHESIZED WAVEFORM MEMORY
47 STEREO SYNTHESIZED WAVEFORM MEMORY
230 INDICATOR

## BEST MODES FOR CARRYING OUT THE INVENTION

Exemplary embodiments of the present invention will be described based on the drawings. The present invention will not be limited by the following embodiments unless it departs from the scope of the invention.

### First Embodiment

FIG. 1 shows a block diagram of audio waveform processing according to claims 1 and 3, which is a first embodiment of the present invention. Audio waveforms handled in this embodiment are digitized.

An audio input waveform 1 is divided into several bands by a frequency band dividing unit 2. This embodiment divides it into six bands. Reference numeral 3 denotes a time stretch/pitch shift amount setting unit, where a parameter is changed by an operation by a user. Band waveforms generated by the frequency band dividing unit 2 undergo a frequency analysis by band component synthesizing units 4-0 to 4-5, and the waveforms are synthesized according to a time stretch/pitch shift amount set based on a result of the frequency analysis while time expansion/compression and pitch conversion are performed.

Next, phase synchronization processing units 5-0 to 5-5 perform phase synchronization processing by using the waveforms synthesized by the band component synthesizing units 4 and a band original waveform generated by the frequency band dividing unit 2. An audio output waveform 6 is a result of additively synthesizing output waveforms of the phase synchronization processing units 5 of respective bands. As an error occurs to lengths of the waveforms outputted by the phase synchronization processing units 5, a correction value is fed back to the band component synthesizing units 4 so as to uniform the lengths of the waveforms outputted on performing synthesizing process next.

It is desirable to set the number of bands to be divided by the frequency band dividing unit 2 and the bands thereof in accordance with the audio input waveform. There are the cases where it is not necessary to divide a simple audio signal such as performance of a single instrument. Inversely, the number of divisions must be increased as to a complicatedly mixed tune. As shown in the block diagram of FIG. 1, the phase synchronization processing is performed on a per-band basis so that phase change in the band is reduced. However, there is a possibility that the phase relation among the bands may collapse. For that reason, it is necessary to use an adequate number of divisions and bands which are not too many. The audio input waveform such as music can be adequately processed when divided into a bandwidth which is one octave or so as a music scale.

FIG. 2 shows details of the band component synthesizing unit 4 of FIG. 1 in a block diagram. Here, it is presumed that a stereo 2-channel audio waveform is processed. Reference numeral 7 denotes a time stretch amount correction processing unit, which corrects a stretch amount and adds a phase reset signal in the case where an error occurs to a length of the output waveform in the phase synchronization processing units 5.

A channel division processing unit 8 of FIG. 2 divides the band waveform generated by the frequency band dividing unit 2 of FIG. 1 into channels. The number of divisions in this case is different according to the number of channels of the audio input waveform. The frequency analysis and the time stretch/pitch shift processing thereafter are performed as to each of the divided channels.

FIG. 12 shows a waveform data flow of the channel division processing unit 8 of FIG. 2. A stereo waveform memory 36 has waveform data of two channels placed in one bundle therein, and the data of each channel is rearranged in a channel 0 waveform memory 37 and a channel 1 waveform memory 38 and is passed to frequency analysis units 9-0 and 9-1. In this case, the same process is also possible by passing an initial address of each channel in the waveform memory 36 to the frequency analysis units 9-0 and 9-1 instead of rearranging the data.

Next, the frequency analysis units 9-0 and 9-1 of FIG. 2 calculate frequencies, phases, and amplitudes included in the waveforms divided by the channel division processing unit 8 by using an STFFT (Short-Time Fast Fourier Transform). The length of the audio waveform analyzable by the STFFT at one time is decided by a window function to be used and an FFT size. This length is defined as one frame, and a waveform synthesis subsequently described is performed frame by frame. For instance, in the case of processing a digital audio waveform discretized at 44.1 kHz, 1024 points are used as the window function and FFT size. Thus, a width on a time axis is approximately 23.2 msec, and the data per approximately 43 Hz is acquired on a frequency axis with a good balance between a frequency resolution and a time resolution. In the case of rendering the frequency resolution higher than this, the FFT size is rendered larger.

In the case of rendering the time resolution higher, the FFT size is rendered smaller. Square root and arctangent operations are performed from the data calculated by the FFT. As shown in FIG. 13, the data on an amplitude AS/AE, a phase PS/PE, and an instantaneous angular frequency W of the frequency component is stored in a memory address. It is adequate that the bandwidth of one frequency component is one halftone or so as the music scale. In the case where the bands are divided into 1-octave bandwidths by the frequency band dividing unit 2, twelve pieces of frequency component data are calculated.

Next, time stretch/pitch shift processing units 10-0 to 10-1 of FIG. 2 synthesize the waveforms according to the result analyzed by the frequency analysis units 9 and the required time stretch/pitch shift amounts. Sine or cosine oscillation is performed for each frequency component, and those are additively synthesized to acquire a synthesized waveform. The time axis for synthesizing the waveform is compressed or expanded according to the time stretch amount required in this case. Amplitude values are interpolated so that the amplitudes will not be discontinuous due to compression or expansion of the time axis. The angular frequency of oscillation is scaled according to the required pitch shift amount. As for the phase when starting the oscillation, the phase calculated by the frequency analysis units 9 is set on an initial operation or when a phase reset signal is inputted. In other cases, the phase on finishing the oscillation of a previous frame is used as-is, and processing is performed so that the waveforms are smoothly connected between the frames. A configuration of these processes is as shown in FIG. 14. The synthesized waveform data is stored in the memory and passed to a channel integration processing unit 11.

Furthermore, the channel integration processing unit 11 renders the waveforms synthesized per channel by the time stretch/pitch shift processing units 10 stereo so as to have the same number of channels as the audio input waveforms. FIG. 15 shows a data flow of the channel integration processing unit 11. The waveforms stored in a channel 0 synthesized waveform memory 39 and a channel 1 synthesized waveform memory 40 are rearranged in one bundle in a stereo synthesized waveform memory 41. In this case, it is also possible to hold initial addresses of the channel 0 synthesized waveform memory 39 and the channel 1 synthesized waveform memory 40 in the stereo synthesized waveform memory 41 and refer to their respective memory addresses to handle them as stereo waveform data. The stereo-rendered audio waveforms after the band component synthesis are further processed by the phase synchronization processing unit 5.

FIG. 3 shows details of the phase synchronization processing unit 5 of FIG. 1 in a block diagram. The waveform for one frame generated by the band component synthesizing unit 4 of FIG. 1 is once accumulated in a buffering processing unit 12 of FIG. 3. This is because the phase synchronization processing requires the waveform of a certain length, and there are the cases where the length of one frame is not sufficient.

The number of frames necessary for the phase synchronization processing is different as to each of the bands having undergone frequency band division. Evaluation of similarity in the phase synchronization processing described later requires periodic components included in the synthesized waveforms equivalent to several waveforms. And the length of the waveform necessary for that purpose is long as to a low-frequency band and short as to a highfrequency band.

If the number of frames is taken too long, intervals of the phase synchronization processing become wider so that the phase change becomes great enough to cause an auditory sense of discomfort due to the phase change to be perceived. It is desirable to use an adequate number of frames by considering the frequency band and auditory quality of the band. If the number of frames is within 40 msec as a time length, the discomfort due to the phase change is not so perceivable. As a wavelength becomes long on the low-frequency band, however, the number of frames of over 40 msec including the waveforms of five wavelengths or so is used.

If the waveforms of the length necessary for the phase synchronization processing are accumulated in the buffering processing unit 12 of FIG. 3, the waveforms are outputted and the buffer is cleared. At the same time, a reference waveform generation signal is outputted, and a reference waveform generating unit 13 generates a reference waveform for the phase synchronization processing from the band original waveform divided by the frequency band dividing unit 2. FIG. 16 shows memory usage of the buffering processing unit. In FIG. 16, it is presumed that the length of the waveform necessary for the phase synchronization processing is 3 frames, the waveforms are outputted if the band synthesized waveforms equivalent to 3 frames are accumulated, and the synthesized waveform of the fourth frame is placed at a head of a buffering memory.

A manner of generating the reference waveforms will be described with reference to FIGS. 4A to 4C. In this example, it is presumed that the phase synchronization processing is performed at every 3 frames. FIG. 4A shows how the band original waveforms correspond to the frames, where the phase synchronization processing occurs after the processing of the frame 3 and the frame 6. In FIG. 4A, the waveforms are drawn in two tiered stages, and the respective channels of a stereo audio waveform are dividedly drawn. FIG. 4B shows the reference waveforms in the respective phase synchronization processing in the case where there is no pitch shift. These waveforms are parts of final frames of a section before execution of the phase synchronization processing, that is, ends of the frame 3 and the frame 6 in FIG. 4A cut out as-is.

FIG. 4C shows the reference waveforms in the case where there is the pitch shift. Here, an example of the case of pitch-shifting to 1/2 is shown. As in FIG. 4C, the waveforms of FIG. 4B are simply scaled against the time axis, and an expansion rate of the time axis is $1/\alpha$ if the value of frequency scaling of the pitch-shift is $\alpha$.

An adequate length of the reference waveform is the length including the periodic components equivalent to one to two wavelengths. If it is too long or too short, a good result cannot be obtained in the evaluation of similarity subsequently described. The pitch shift processing on reference waveform generation is only a simple scaling of the time axis. The pitch shift by the scaling of the time axis usually has a problem that the length of the waveforms changes. As for the reference waveform, however, there is no such problem because it is only used for the evaluation of similarity and a cross-fade process. FIG. 17 shows the data flow of the reference waveform generation unit 13 of FIG. 3. Of the waveform data stored in the buffering memory, the waveform data is read from the address of the end of the third frame, and the scaling of the time axis is performed according to the pitch shift amount so as to output the reference waveform.

Next, a waveform similarity evaluation unit 14 of FIG. 3 evaluates at what time point on the time axis the similarity of two waveforms is high by using the waveform accumulated in the buffering processing unit 12 and the waveform generated by the reference waveform generation unit 13. The location of high similarity acquired here is used as a cross-fade position in the subsequent cross-fade process. To acquire this, an arbitrary evaluation function for evaluating similarity is prepared, and the evaluation function is executed for the buffered band synthesized waveform while shifting the time axis so as to acquire the time point of the highest evaluated value as a result. As an example of the evaluation function, an absolute value of a difference between the band synthesized waveform and the reference waveform is calculated at each sample point to use a result of adding them up as the evaluated value. FIG. 18 specifically describes this evaluation method. In FIG. 18, the number of sample points of the reference waveform is $l_r$. A part of the waveform data stored in the buffer is taken out, and the absolute value of the difference from the reference waveform is calculated as to all the n pieces of sample point to acquire the sum thereof as the evaluated value. The waveform is cut out by shifting the address of the buffering memory, and the evaluated value is calculated as to the entire waveform data. Of the evaluated values thus calculated, it can be said that a smaller value indicates a smaller difference in the waveform and higher similarity.

Next, the cross-fade process is performed to return from the band synthesized waveform buffered by a cross-fade processing unit 15 to the reference waveform by using the waveform generated by the reference waveform generation unit 13 and the cross-fade position calculated by the waveform similarity evaluation unit 14.

A description will be given as to the concept of the phase synchronization processing described so far with reference to an example shown in FIG. 5. In FIG. 5, two channels of the stereo audio waveform are dividedly drawn in two tiered stages, which indicates that the reference waveform generation, similarity evaluation, and cross-fade process are performed in stereo.

A portion (a) of FIG. 5 shows the band original waveform which is presumed undergoing twice time-stretching. In this case, the length of the band original waveform of the portion (a) of FIG. 5 is $l_1$.

According to the processing described so far, a band synthesized waveform (b) of FIG. 5 stretched to twice and accumulated in the buffering processing unit 12 of FIG. 3 and a reference waveform (c) of FIG. 5 generated by the reference waveform generation unit 13 are obtained respectively. In this case, it is defined that the length of the band synthesized waveform (b) in FIG. 5 is $l_2$ (= $l_1 \times 2$), and the length of the reference waveform (c) in FIG. 5 is $l_r$. The similarity of these waveforms is evaluated by the similarity evaluation unit 14 of FIG. 3, and the calculated cross-fade position of FIG. 5 is $t_{cf}$.

The cross-fade process of FIG. 5 is performed in the range of the length corresponding to the reference wave form from the calculated cross-fade position $t_{cf}$, that is, the section from $t_{cf}$ to $t_{cf} + l_r$. A portion (d) in FIG. 5 shows the waveform after the cross-fade process. As is understandable from (d) in FIG. 5, the end of the waveform after finishing the cross-fade process has the same value as the end of the reference waveform. To be more specific, it returns to the same phase condition (is phase-synchronized) as the band original waveform. Even if the audio input waveform is stereo, the phase relation between the channels is kept by the processing. This portion deserves special mention in the present invention.

FIG. 19 shows details of the cross-fade process. In FIG. 19, it is presumed that the length of the waveform necessary for the phase synchronization processing is equivalent to three frames. The waveforms from the cross-fade position $t_{cf}$ onward accumulated in the buffering memory undergo rate calculation and multiplication as to each sample point. At the same time, the reference waveform undergoes the rate calculation and multiplication so as to output the sum of the values after the multiplication. The rate calculations in FIG. 19 indicate an example of cross-fades by linear interpolation. The waveforms prior to the cross-fade position $t_{cf}$ are stored as-is as the output waveforms in an output waveform memory.

The waveform after finishing the cross-fade process becomes a band output waveform as-is. However, the length thereof is $t_{cf} + l_r$ which is shorter than the length $l_2$ of an original stretched waveform. As the portion equivalent to the length of $l_2 - (t_{cf} + l_r)$ remaining after $t_{cf} + l_r$ is discarded, that length occurs as an error in the phase synchronization processing. To correct this, the value of the error is passed as a stretch correction value to a time stretch amount correction processing unit 7 in the band component synthesizing unit of FIG. 2. As a result thereof, the waveform synthesis is performed by adding the length of the error in the next frame so as to keep the length of the original waveform.

If the error due to the phase synchronization processing is large, there is an increase in the discarded amount of the waveforms generated by the band component synthesizing units 4 of FIG. 1, which leads to lowering of processing efficiency. To prevent this, it is necessary to lessen the error. As one of the means for solving this, there is a thinkable device, such as inclining the evaluation function of the waveform similarity evaluation unit 14 of FIG. 3 to heighten the evaluated value as the position goes backward.

The above process is performed to each of the bands so as to acquire a final audio output waveform by adding them.

Next, an audio waveform processing device of the present invention will be described. FIG. 6 shows an audio signal waveform processing device as an embodiment according to the present invention. This example reproduces and outputs the audio waveform on recording media such as a hard disk drive 19 and a CD-ROM drive 20 while performing the time stretching and pitch shifting. The present invention, however, is not limited to this example, and the audio waveform processing device of the present invention can be mounted on various instruments, such as a sampler and an electronic musical instrument.

In FIG. 6, a CPU 16 is a central processing unit for exerting overall control of the device, a ROM 17 is a read-only memory storing a control program, and a RAM 18 is a random access memory utilized as a memory work area and the like. The hard disk drive 19 and the CD-ROM drive 20 are external storage devices which are used as inputs of the audio waveforms. A speech output unit 21 is composed of a D/A converter for converting a digital audio waveform to analog and a speaker. A controller group 22 is various switches and the like. An indicator 230 is an indicator used to display parameters on the screen when selecting the time stretch/pitch shift amount.

A program composed of an instruction group for causing a computer to execute an audio waveform processing method of the present invention is stored in the ROM 17. The CPU 16 performs waveform processing to the audio waveforms of the hard disk drive 19 and the CD-ROM drive 20 while using the RAM 18 as a working memory, and the result is outputted as sound from the speaker of the speech output unit 21. It is possible, with the above configuration, to realize an audio reproducing device which performs the time stretch/pitch shift processing of high quality to music recorded on a hard disk and a CD-ROM.

Second Embodiment

The first embodiment has described the example of implementing the waveform processing by performing the band division on the audio input waveform. It is possible, however, to implement the same waveform processing as that described in the first embodiment by using the means disclosed in claims 2 and 4 which do not perform the band division on the audio input waveform. In FIG. 1, the frequency band dividing unit 2, the band component synthesizing unit (band 1) 4-1 to the band component synthesizing unit (band 5) 4-5, and the phase synchronization processing unit (band 1) 5-1 to the phase synchronization processing unit (band 5) 5-5 are deleted, and the audio input waveform 1 is directly inputted to the band component synthesizing unit (band 0) 4-0 and perform the same waveform processing as that described in the first embodiment.

Third Embodiment

Next, a computer program of claim 5 as a third embodiment will be described. FIG. 20 shows a flowchart of the computer program. First, input waveform data is read (step S1), and a frequency band dividing process (step S2) which is the same as the frequency band dividing unit 2 of FIG. 1 is performed so as to output the waveform of each band. This process is composed of an instruction group such as multiplications and additions for realizing the band-pass filter or an instruction group for executing FFT in the case of realizing the band division by Fourier transform.

Next, an analytical process is performed as to instantaneous amplitude, angular frequency, and phases of band waveform data having undergone the frequency band division (step S3). This process is a part equivalent to the frequency analysis units 9-0 to 9-1 of FIG. 2, and is composed of the instruction group for executing the FFT and instruction groups of square roots for calculating the amplitude, arctans for calculating the phases, and the like.

A waveform synthesis process (step S4) is executed based on the analyzed data. This process is the same process as that of the time stretch/pitch shift processing units 10-0 to 10-1 of FIG. 2. It is composed of instruction groups such as cosine functions for playing a role of an oscillator and multiplications for multiplying the amplitudes, where a time stretched and/or pitch-shifted waveform is synthesized.

Next, it is determined whether or not the length of the synthesized waveform has reached the length necessary for the phase synchronization processing (step S5). In the case where the necessary length has not been reached, the procedure returns to the step S1 to repeat the process until the necessary length is reached while accumulating the synthesized waveforms in the memory. In the case where the necessary length has been reached, the procedure moves on to the next step. This process is the same process as that of the buffering processing unit 12 of FIG. 3.

The phase synchronization processing (step S6) is performed to the synthesized waveform. This processing is equivalent to the processing of the reference waveform generation unit 13, the waveform similarity evaluation unit 14, and the cross-fade processing unit 15 of FIG. 3. This processing is composed of an instruction group of subtractions for executing the evaluation function of similarity and the like and an instruction group of multiplications and additions for performing the cross-fade process.

The processing of the step S2 to the step S6 is performed as to each of the bands having undergone the band division, and output waveform data of each band is added up to execute output waveform data writing (step S7). An instruction of addition is used to add up the output waveform data of the bands. Next, it is determined whether or not the processing has been finished as to the entire input waveform (step S8). If the processing has not been finished, the procedure returns to the step S1 to repeat the processing. If the processing has been finished as to the entire input waveform, the processing is finished.

Fourth Embodiment

Next, an embodiment according to claims 6 and 8 of the present invention will be described. FIG. 9 shows a block diagram of audio waveform processing as a fourth embodiment. The audio waveform handled in this embodiment is digitized.

An audio input waveform 23 is divided into several bands by a frequency band dividing unit 24. The audio input waveform 23 is divided into six bands in this embodiment. Reference numeral 25 denotes a time stretch/pitch shift amount setting unit, where a parameter is changed by an operation by the user. Band waveforms generated by the frequency band dividing unit 24 undergo a frequency analysis by band component synthesizing units 26-0 to 26-5, and the waveforms are synthesized according to a time stretch/pitch shift amount set based on a result of the analysis while the time expansion/compression and the pitch conversion are performed.

Next, phase synchronization processing units 27-0 to 27-5 perform the phase synchronization processing by using the waveforms synthesized by the band component synthesizing units 26 and frequency component information. An audio output waveform 28 is a result of additively synthesizing output waveforms of the phase synchronization processing units 27 of respective bands. As the phase condition of the synthesized waveform is a linear phase lead or a linear phase lag of the original waveform in the phase synchronization processing unit 27, a phase correction value is fed back to the band component synthesizing units 26 so as to correct a phase value to be applied on the next synthesis process.

It is desirable to set the number of bands to be divided by the frequency band dividing unit 24 and the bands thereof in accordance with the audio input waveform. There are the cases where it is not necessary to divide a simple audio signal such as performance of a single instrument. Inversely, the number of divisions must be increased as to a complicatedly mixed tune. As shown in the block diagram, the phase synchronization processing is performed on a per-band basis so that the phase change in the band is reduced. However, there is a possibility that the phase relation among the bands may collapse. For that reason, it is necessary to use an adequate number of divisions and bands which are not too many. The audio input waveform such as music can be adequately processed when divided into a bandwidth which is one octave or so as a music scale.

FIG. 10 shows details of the band component synthesizing unit 26 of FIG. 9 in a block diagram. Here, it is presumed that a stereo 2-channel audio waveform is processed. A channel division processing unit 29 divides the band waveform generated by the frequency band dividing unit 24 into channels. The number of divisions in this case is different according to the number of channels of the audio input waveform. The frequency analysis and the time stretch/pitch shift processing thereafter are performed as to each of the divided channels.

FIG. 21 shows a waveform data flow of the channel division processing unit 29 of FIG. 10. A stereo waveform memory 42 has waveform data of two channels placed in one bundle therein, and the data of each channel is rearranged in a channel 0 waveform memory 43 and a channel 1 waveform memory 44 and is passed to frequency analysis units 30-0 to 30-1. In this case, the same process is also possible by passing an initial address of each channel in the waveform memory 36 to the frequency analysis units 30-0 to 30-1 instead of rearranging the data.

Next, the frequency analysis units 30-0 to 30-1 of FIG. 10 calculate frequencies, phases, and amplitudes included in the waveforms divided by the channel division processing unit 29 by using the STFFT (Short-Time Fast Fourier Transform). The length of the audio waveform analyzable by the STFFT at one time is decided by a window function to be used and an FFT size. This length is defined as one frame, and a waveform synthesis subsequently described is performed frame by frame. For instance, in the case of processing a digital audio waveform discretized at 44.1 kHz, 1024 points are used as the window function and FFT size. Thus, a width on the time axis is approximately 23.2 msec, and the data per approximately 43 Hz is acquired on a frequency axis with a good balance between a frequency resolution and a time resolution. In the case of rendering the frequency resolution higher than this, the FFT size is rendered larger. In the case of rendering the time resolution higher, the FFT size is rendered smaller. Square root and arctangent operations are performed from the data calculated by the FFT. As shown in FIG. 13, the data on an amplitude AS/AE, a phase PS/PE, and an instantaneous angular frequency W of the frequency component is stored in a memory address. It is adequate that the bandwidth of one frequency component is one halftone or so as the music scale. In the case where the bands are divided into 1-octave bandwidths by the frequency band dividing unit 2, twelve pieces of frequency component data are calculated.

Next, time stretch/pitch shift processing units 31-0 to 31-1 of FIG. 10 synthesize the waveforms according to the result analyzed by the frequency analysis units 30 and the required time stretch/pitch shift amounts. Sine or cosine oscillation is performed for each frequency component, and those are additively synthesized to acquire a synthesized waveform. The time axis for synthesizing the waveform is compressed or expanded according to the time stretch amount required in this case. Amplitude values are interpolated so that the amplitudes will not be discontinuous due to the compression or expansion of the time axis. The angular frequency of oscillation is scaled according to the required pitch shift amount. As for the phase when starting the oscillation, the phase calculated by the frequency analysis units 30 of FIG. 10 is set on an initial operation. In other cases in a state where the phase correction value is not inputted, the phase on finishing the oscillation of a previous frame is used as-is, and processing is performed so that the waveforms are smoothly connected between the frames. In the case where the phase correction value is inputted, it is the frame after performing the phase synchronization processing subsequently described. Therefore, the linear phase lead or linear phase lag state of the phase analyzed by the frequency analysis units 30 is calculated based on the phase correction value so as to use it as the phase when starting the oscillation. A configuration of these processes is as shown in FIG. 22. The synthesized waveform data is stored in the memory and passed to a channel integration processing unit 32.

Furthermore, the channel integration processing unit 32 renders the waveforms synthesized per channel by the time stretch/pitch shift processing units 31 stereo so as to have the same number of channels as the audio input waveforms. FIG. 23 shows a data flow of the channel integration processing unit 31. The waveforms stored in a channel 0 synthesized waveform memory 45 and a channel 1 synthesized waveform memory 46 are rearranged in one bundle in a stereo synthesized waveform memory 47. In this case, it is also possible to hold initial addresses of the channel 0 synthesized waveform memory 45 and the channel 1 synthesized waveform memory 46 in the stereo synthesized waveform memory 47 and refer to their respective memory addresses to handle them as the stereo waveform data. The stereo-rendered audio waveforms after the band component synthesis are further processed by the phase synchronization processing unit 27.

FIG: 11 shows details of the phase synchronization processing unit 27 of FIG. 9 in a block diagram. The waveform for one frame generated by the band component synthesizing units 26 is once accumulated in a buffering processing unit 33. This is because the phase synchronization processing requires the waveform of a certain length, and there are the cases where the length of one frame is not sufficient.

The number of frames necessary for the phase synchronization processing is different as to each of the bands having undergone frequency band division. Evaluation of similarity in the phase synchronization processing described later requires periodic components included in the synthesized waveforms equivalent to several waveforms. And the length of the waveform necessary for that purpose is long as to a low-frequency band and short as to a highfrequency band.

If the number of frames is taken too long, intervals of the phase synchronization processing become wider so that the phase change becomes great enough to cause the auditory sense of discomfort due to the phase change to be perceived. It is desirable to use an adequate number of frames by considering the frequency band and auditory quality of the band. If the number of frames is within 40 msec as a time length, the discomfort due to the phase change is not so perceivable. As the wavelength becomes long on the low-frequency band, however, the number of frames of over 40 msec including the waveforms of five wavelengths or so is used.

If the waveforms of the length necessary for the phase synchronization processing are accumulated in the buffering processing unit 33 of FIG. 11, the waveforms are outputted and the buffer is cleared. FIG. 16 shows memory usage of the buffering processing unit 33. In FIG. 16, it is presumed that the length of the waveform necessary for the phase synchronization processing is 3 frames, the waveforms are outputted if the band synthesized waveforms equivalent to 3 frames are accumulated, and the synthesized waveform of the fourth frame is placed at the head of the buffering memory.

A phase synchronization waveform generation signal is outputted simultaneously with the output of a buffered waveform so that a phase synchronization waveform is generated by a phase synchronization waveform generating unit 34 based on frequency information of the band component synthesizing units 26. The phase synchronization waveform is a waveform which is highly correlated with the phase condition after the waveform synthesis and is also a linear phase lead or a linear phase lag of the phase of the original waveform. As the linear phase lead or the linear phase lag is corresponding to a lead or a lag in a time domain, the phase synchronization waveform is equivalent to the original waveform cut out by shifting the time axis. A cross-fade processing unit 35 of FIG. 11 performs the cross-fade process from the buffered waveform to the phase synchronization waveform so as to allow the phase condition of the original waveform to be kept even if the time stretch/pitch shift processing is performed.

The processing of the phase synchronization waveform generating unit 34 will be described by using a formula. The number of frequency components of all the channels included in the band is n. The amplitudes of the frequency components are $a_0$, $a_1$, ... to $a_{n-1}$, the phases on finishing the waveform synthesis process are $\theta_0$, $\theta_1$, ... $\theta_{n-1}$, and the instantaneous angular frequencies are $\omega_0$, $\omega_1$, ... $\omega_{n-1}$. The phases of the original waveforms on finishing the frame, that is, the phases of the original waveforms on starting the next frame are $\phi_0$, $\phi_1$, ... $\phi_{n-1}$. Such frequency component information is calculated by the band component synthesizing units 26 of FIG. 9, and the information recorded on the memory as in FIG. 13 is inputted. To be more specific, $a_0$, $a_1$, ... to $a_{n-1}$ correspond to the amplitude AE on finishing the frame, $\omega_0$, $\omega_1$, ... $\omega_{n-1}$ correspond to the instantaneous angular frequency W, and $\phi_0$, $\phi_1$, ... $\phi_{n-1}$ correspond to the phase PE on finishing the frame. As for $\theta_0$, $\theta_1$, ... $\theta_{n-1}$, the phases on finishing the oscillation of a cosine oscillator of FIG. 22 are referred to.

The following is introduced as the formula for evaluating a difference between the phase condition on finishing the waveform synthesis process and the phase condition of the original waveform on starting the next frame. Here, e is a natural logarithm.

[Formula 1]

$$\begin{aligned}&\sum_{k=0}^{n-1}\left|a_k(e^{i\theta_k}-e^{i\phi_k})\right|\\&=\sum_{k=0}^{n-1}a_k\ |(\cos\theta_k-\cos\phi_k)+i(\sin\theta_k-\sin\phi_k)|\\&=\sum_{k=0}^{n-1}a_k\sqrt{(\cos^2\theta_k-2\cos\theta_k\cos\phi_k+\cos^2\phi_k)+(\sin^2\theta_k-2\sin\theta_k\sin\phi_k+\sin^2\phi_k)}\\&=\sum_{k=0}^{n-1}a_k\sqrt{2\{1-\cos(\theta_k-\phi_k)\}}\end{aligned}$$

In the case of $\theta = \phi$, there is no phase difference and an evaluation formula is 0 as to any frequency component. The larger the phase difference is, the larger the value of the evaluation formula becomes. If the time stretch/pitch shift processing is performed, it is normally $\theta \neq \phi$ and the evaluation formula is not 0. Thus, a function F(t) is introduced, which is a function for evaluating the difference between the phase condition on finishing the waveform synthesis process and the phase condition of the original waveform in a position presumed to be shifted by "t" from the next frame starting position in the time domain. As a lead or a lag on the time axis corresponds to the linear phase lead or the linear phase lag, F(t) is the formula of Formula 2 in which $\phi_k$ of Formula 1 is replaced by $\phi_k + \omega_k t$.

[Formula 2]

$$F(t)=\sum_{k=0}^{n-1}\left|a_k(e^{i\theta_k}-e^{i(\phi_k+\omega_k t)})\right|=\sum_{k=0}^{n-1}a_k\sqrt{2\{1-\cos(\theta_k-\phi_k-\omega_k t)\}}$$

The closer to 0 the evaluation function F(t) is, the less the phase difference becomes, and the higher the correlation as the waveform becomes. Therefore, it is possible to prevent noise offensive to the ear from being produced on the cross-fade process by acquiring a value $t_p$ at which the evaluation function F(t) becomes minimal, synthesizing the waveform presumed to be shifted by $t_p$ from the next frame starting position in the time domain in the original waveform and using it as the phase synchronization waveform.

The phase synchronization waveform generating unit 34 of FIG. 11 acquires this $t_p$ first. To acquire this, the value of the evaluation function F(t) is acquired in the range of a time domain $-t_w < t < t_w$, and the smallest F(t) should be taken as $t_p$. Size of $t_w$ should be the length equivalent to several wavelengths of the frequency component included in the band. If $t_w$ is too small, a point where the value of F(t) is small may not be found. Inversely, if $t_w$ is large, an error occurs in the evaluation of F(t) at a point where t is too distant from 0.

The error occurring to the evaluation function F(t) is caused by use of the instantaneous angular frequencies $\omega_0$, $\omega_1$, ... $\omega_{n-1}$ in the formula. Here, $\omega_0$, $\omega_1$, ... $\omega_{n-1}$ are instantaneous values which essentially change over time. The formula of F(t) uses fixed values of $\omega_0$, $\omega_1$, ... $\omega_{n-1}$, and so it is not suited to the evaluation of the phase condition because, as t goes away from 0, it becomes totally different from a primary phase condition of the original waveform. For that reason, it is important to set the value of $t_w$ at an adequate value which is not too large. For the same reason, it is also thinkable to devise ways of obtaining the phase synchronization waveform which is closer to the phase condition of the original waveform by inclining so that the value of F(t) becomes smaller in proximity to t = 0 and $t_p$ takes a value close to 0.

FIG. 24 shows details of a calculation of the evaluation function F(t). The frequency component information analyzed by the band component synthesizing units 26 of FIG. 9 is stored in a frequency component memory of FIG.

24. The evaluated value is calculated in conjunction with the phases on finishing the oscillation of the cosine oscillator of the band component synthesizing units 26 and a variable t in the time domain. In FIG. 24, it is presumed that there are n pieces of frequency components so that the values are acquired as to each of the components by using the multiplication, subtraction, cosine, and square root. The evaluated value is calculated by adding up these values. FIG. 24 represents the calculation of Formula 2 in a block diagram. The evaluated value is acquired while changing the variable t in the range of $-t_w$ to $t_w$, and the variable t when the evaluated value becomes smallest is taken as $t_p$.

Next, the phase synchronization waveform is synthesized based on the acquired $t_p$. As for the synthesis process, the sine or cosine oscillation is performed for each channel while performing the pitch shifting as with the time stretch/pitch shift processing units 31 of FIG. 10. The phase synchronization waveform is only used for the cross-fade process. Therefore, the length equivalent to several wavelengths of the frequency component included in the band is sufficient as the length for synthesizing the waveform, and the time stretch can be ignored. In this case, it is necessary to adjust the phase condition when starting the oscillation so that the phase condition at the end of the phase synchronization waveform is put in the linear phase lead or linear phase lag state by an equivalent of $t_p$ from the phase condition of the original waveform when starting the next frame.

The phase synchronization waveform synthesized as above is outputted to the cross-fade processing unit 35 of FIG. 11. The cross-fade processing unit 35 performs the cross-fade process to the phase synchronization waveforms from the waveforms after the band component synthesis accumulated in the buffering processing unit 33. The cross-fade process is performed by mutually aligning the ends of the waveforms. As for the waveforms after the cross-fade process, the phase condition at the ends thereof is the same as the phase condition at the ends of the phase synchronization waveforms, which is accordingly the linear phase lead or linear phase lag state of the phase condition of the original waveforms. To be more specific, the waveforms after the cross-fade process have the phase condition equal to the original waveforms. The waveforms after the cross-fade process are outputted as final band waveforms.

The $t_p$ acquired by the phase synchronization waveform generating unit 34 of FIG. 11 is outputted as the phase correction value to the band component synthesizing units 26 of FIG. 9. As previously described, if the phase correction value is outputted, the phase when starting the synthesis process of the next frame is put in the linear phase lead or linear phase lag state of the phase condition of the original waveform. Thus, the waveforms smoothly connecting to the waveforms after the cross-fade process are synthesized by the next frame.

A description will be given by using FIG. 25 as to the concept of the phase synchronization waveform generating unit 34 and the cross-fade processing unit 35 of FIG. 11 described so far. In FIG. 25, two channels of the stereo audio waveform are dividedly drawn in two tiered stages, which indicates that the similarity evaluation, phase synchronization waveform generation, and cross-fade process are performed in stereo.

A portion (a) of FIG. 25 shows the band original waveform, which is presumed undergoing twice time-stretching. A band synthesized waveform (b) of FIG. 25 stretched to twice is accumulated in the buffering processing unit 38 based on the band original waveform according to the processing described so far. The band synthesized waveform is a waveform which has the band original waveform time-stretched to twice. However, the phase relation of the frequency components at the ends has become totally different from that of the band original waveform, which is a cause of the auditory sense of discomfort due to, for example, a lack of feeling of normalcy in stereo.

A portion (c) of FIG. 25 shows the evaluation function F(t) and an appearance of generation of the phase synchronization waveform. The evaluated value is calculated while changing the variable t in the range of $-t_w$ to $t_w$, as described by using FIG. 24 based on the frequency component information analyzed on generating the band synthesized waveform and the phases on finishing the oscillation of the oscillator. The waveform which is the linear phase lead or lag of the end of the band original waveform on changing t is shown in the middle portion of the portion (c) of FIG. 25. This shows what the waveform of the linear phase lead or linear phase lag is like, and the process is not actually performed for all t but only for t when the evaluated value is smallest as the phase synchronization waveform in the waveform synthesis. In the portion (c) of FIG. 25, the length of the waveform synthesized in this case is a length equivalent to two wavelengths of the frequency component included in the band.

A portion (d) of FIG. 25 shows the waveform after the cross-fade process. The cross-fade process is performed by aligning the end of the band synthesized waveform of the portion (b) of FIG. 25 and the end of the phase synchronization waveform synthesized in the portion (c) of FIG. 25. The end of the waveform after the cross-fade process has the same value as the end of the phase synchronization waveform, which is accordingly the linear phase lead or lag state of the band original waveform. Thus, even if the audio input waveform is stereo, the phase relation of the frequency components is very close to the band original waveform, and so the phase synchronization has been performed.

FIG. 26 shows details of the cross-fade process. In FIG. 26, it is presumed that the length of the waveform necessary for the phase synchronization processing is equivalent to three frames (phase synchronization processing period). The buffering memory has frame synthesized waveforms accumulated therein by the buffering processing unit 33 of FIG. 11. The phase synchronization waveform is generated by the phase synchronization waveform generating unit 34. In this case, if the length of the band synthesized waveform accumulated in the buffering memory is 1 and the length of the phase synchronization waveform is $l_p$, the cross-fade process is started from a point of $1 - l_p$ on the band

synthesized waveform so as to align the ends of the two waveforms. The cross-fade process performs the rate calculation and multiplication of each waveform as to each sample point to output the sum of the values after the multiplication. The rate calculation of FIG. 26 shows an example of a cross-fade by linear interpolation. The waveform before 1 - $l_p$ is stored as-is as the output waveform in the output waveform memory.

The above processing is performed to each band, and a band waveform output is added to acquire a final audio output waveform.

Fifth Embodiment

The fourth embodiment has described the example of implementing the waveform processing by performing the band division on the audio input waveform. However, the same waveform processing as described in the fourth embodiment can be realized by using the means disclosed in claims 7 and 9 which do not perform the band division on the audio input waveform. In FIG. 9, the frequency band dividing unit 24, the band component synthesizing unit (band 1) 26-1 to the band component synthesizing unit (band 5) 26-5 and the phase synchronization processing unit (band 1) 27-1 to the phase synchronization processing unit (band 5) 27-5 are deleted, and the audio input waveform 23 is directly inputted to the band component synthesizing unit (band 0) 26-0 so as to implement the same waveform processing as described in the fourth embodiment.

Sixth Embodiment

Next, a computer program according to claim 10 as a sixth embodiment will be described. FIG. 20 shows a flowchart of the computer program. First, the input waveform data is read (step S1), and the frequency band dividing process (step S2) which is the same as that of the frequency band dividing unit 24 of FIG. 9 is performed so as to output the waveform of each band. This process is composed of an instruction group such as multiplications and additions for realizing the band-pass filter or an instruction group for executing the FFT in the case of realizing the band division by the Fourier transform.

Next, an analytical process is performed as to the instantaneous amplitude, angular frequency, and phases of the band waveform data having undergone the frequency band division (step S3). This process is a part equivalent to the frequency analysis units 30-0 to 30-1 of FIG. 10, and is composed of an instruction group for executing the FFT and instruction groups of the square roots for calculating the amplitude, arctans for calculating the phases, and the like.

The waveform synthesis process (step S4) is executed based on the analyzed data. This process is the same process as that of the time stretch/pitch shift processing units 31-0 to 31-1 of FIG. 10. It is composed of instruction groups such as the cosine functions for playing a role of an oscillator and multiplications for multiplying the amplitudes, where the time stretched and/or pitch-shifted waveform is synthesized.

Next, it is determined whether or not the length of the synthesized waveform has reached the length necessary for the phase synchronization processing (step S5). In the case where the necessary length has not been reached, the procedure returns to the step S1 to repeat the process until the necessary length is reached while accumulating the synthesized waveforms in the memory. In the case where the necessary length has been reached, the procedure moves on to the next step. This process is the same process as that of the buffering processing unit 33 of FIG. 11.

The phase synchronization processing (step S6) is performed to the synthesized waveform. This processing is equivalent to the processing of the phase synchronization waveform generating unit 34 and the cross-fade processing unit 35 of FIG. 11. This processing is composed of an instruction group of subtractions, multiplications, cosines, and square roots for executing a phase evaluation function and the like and an instruction group of multiplications and additions for performing the cross-fade process.

The processing of the step S2 to the step S6 is performed as to each of the bands having undergone the band division, and the output waveform data of each band is added up to execute the output waveform data writing (step S7). An instruction of addition is used to add up the output waveform data of the bands. Next, it is determined whether or not the processing has been finished as to the entire input waveform (step S8). If the processing has not been finished, the procedure returns to the step S1 to repeat the processing. If the processing has been finished as to the entire input waveform, the processing is finished.

INDUSTRIAL APLICABILITY

The effect of using the audio waveform processing device, method, and program of the present invention is that, whether the audio input waveform is monaural or stereo, the phase change invariably occurring in the conventional vocoder method is reduced through the entire waveform so that the time stretch and pitch shift processing of high quality can be realized.

## Claims

1. An audio waveform processing device for performing a frequency analysis on an audio waveform and performing a sine wave or cosine wave synthesis process on each frequency component while performing time compression or expansion and pitch conversion as required, **characterized in that**:

   the frequency analysis is performed for each band of an audio signal divided into multiple frequency bands, the audio waveform processing device comprising:

   reference waveform generating means (13) arranged to generate a reference waveform from an original waveform;
   comparison means (14, 34) arranged to make a comparison, by using an evaluation function, between a phase condition after the waveform synthesis process of each band and a phase condition of the reference waveform of each band to generate a waveform having a linear phase lead or a linear phase lag with respect to the original waveform highly correlated with the phase condition after the synthesis process as a phase synchronization waveform, wherein a distance on a complex-number plane between the waveforms is used as the evaluation function for evaluating a difference between the phase condition after the waveform synthesis process of each band and the phase condition of the reference waveform of each band; and
   processing means (15, 35) arranged to perform a cross-fade from the waveform after the synthesis process to the generated phase synchronization waveform in a phase synchronization processing period so that a phase change occurring on the waveform synthesis is reset in the phase synchronization processing period.

2. The audio waveform processing device according to claim 1, **characterized in that**:

   in the frequency band division of the device, the audio waveform is processed by regarding it as one band as-is without performing the band division.

3. An audio waveform processing method of performing a frequency analysis on an audio waveform and performing a sine wave or cosine wave synthesis process on each frequency component while performing time compression or expansion and pitch conversion as required, **characterized in that**:

   the frequency analysis is performed for each band of an audio signal divided into multiple frequency bands, the audio waveform processing method comprising the steps of:

   generating a reference waveform from an original waveform;
   making a comparison, using an evaluation function, between a phase condition after the waveform synthesis process of each band and a phase condition of the reference waveform of each band to generate a waveform having a linear phase lead or a linear phase lag with respect to the original waveform highly correlated with the phase condition after the synthesis process as a phase synchronization waveform, wherein a distance on a complex-number plane between the waveforms is used as the evaluation function for evaluating a difference between the phase condition after the waveform synthesis process of each band and the phase condition of the reference waveform of each band; and
   cross-fading from the waveform after the synthesis process to the generated phase synchronization waveform in a phase synchronization processing period so that a phase change occurring on the waveform synthesis is reset in the phase synchronization processing period.

4. The audio waveform processing method according to claim 3, **characterized in that**:

   in the frequency band division of the method, the audio waveform is processed by regarding it as one band as-is without performing the band division.

5. A computer program comprising an instruction group for causing a computer to execute the audio waveform processing method according to any one of claims 3 and 4.

## Patentansprüche

1. Audiowellenform-Verarbeitungsvorrichtung zum Durchführen einer Frequenzanalyse einer Audiowellenform und zum Durchführen eines Sinuswellen- oder Cosinuswellen-Syntheseprozesses jeder Frequenzkomponente, während erforderlichenfalls eine Zeitkompression oder -expansion und eine Tonhöhenkonversion durchgeführt werden, **dadurch gekennzeichnet, dass**:

die Frequenzanalyse für jedes Band eines Audiosignals durchgeführt wird, das in mehrere Frequenzbänder unterteilt ist, wobei die Audiowellenform-Verarbeitungsvorrichtung umfasst:

ein Referenzwellenform-Erzeugungsmittel (13), eingerichtet, um eine Referenzwellenform aus einer ursprünglichen Wellenform zu erzeugen;
ein Vergleichsmittel (14, 34), eingerichtet, um mittels der Verwendung einer Evaluierungsfunktion einen Vergleich zwischen einer Phasenbedingung nach dem Wellenform-Syntheseprozess eines jeden Bandes und einer Phasenbedingung der Referenzwellenform eines jeden Bandes durchzuführen, um eine Wellenform, die eine lineare Phasenvorauseilung oder eine lineare Phasenverzögerung in Bezug auf die ursprüngliche Wellenform hat, die stark mit der Phasenbedingung nach dem Syntheseprozess korreliert, als eine Phasensynchronisations-Wellenform zu erzeugen, wobei ein Abstand auf einer komplexen Zahlenebene zwischen den Wellenformen als die Evaluierungsfunktion zum Evaluieren einer Differenz zwischen der Phasenbedingung nach der Wellenform-Synthese eines jeden Bandes und der Phasenbedingung der Referenzwellenform eines jeden Bandes verwendet wird; und
ein Verarbeitungsmittel (15, 35), eingerichtet, um ein Überblenden von der Wellenform nach dem Syntheseprozess zu der erzeugten Phasensynchronisations-Wellenform in einem Phasensynchronisations-Verarbeitungszeitraum durchzuführen, sodass eine Phasenveränderung, die bei der Wellenform-Synthese auftritt, im Phasensynchronisations-Verarbeitungszeitraum zurückgesetzt wird.

**2.** Audiowellenform-Verarbeitungsvorrichtung nach Anspruch 1, **dadurch gekennzeichnet, dass**:

bei der Frequenzbandunterteilung der Vorrichtung die Audiowellenform verarbeitet wird, indem sie wie sie ist als ein Band betrachtet wird, ohne die Bandunterteilung durchzuführen.

**3.** Audiowellenform-Verarbeitungsverfahren zum Durchführen einer Frequenzanalyse einer Audiowellenform und zum Durchführen eines Sinuswellen- oder Cosinuswellen-Syntheseprozesses jeder Frequenzkomponente, während erforderlichenfalls eine Zeitkompression oder -expansion und eine Tonhöhenkonversion durchgeführt werden, **dadurch gekennzeichnet, dass**:

die Frequenzanalyse für jedes Band eines Audiosignals durchgeführt wird, das in mehrere Frequenzbänder unterteilt ist, wobei das Audiowellenform-Verarbeitungsverfahren die folgenden Schritte umfasst:

Erzeugen einer Referenzwellenform aus einer ursprünglichen Wellenform;
Durchführen eines Vergleichsmittels der Verwendung einer Evaluaierungsfunktion zwischen einer Phasenbedingung nach dem Wellenform-Syntheseprozess eines jeden Bandes und einer Phasenbedingung der Referenzwellenform eines jeden Bandes, um eine Wellenform, die eine lineare Phasenvorauseilung oder eine lineare Phasenverzögerung in Bezug auf die ursprüngliche Wellenform hat, die stark mit der Phasenbedingung nach dem Syntheseprozess korreliert, als eine Phasensynchronisations-Wellenform zu erzeugen, wobei ein Abstand auf einer komplexen Zahlenebene zwischen den Wellenformen als die Evaluierungsfunktion zum Evaluieren einer Differenz zwischen der Phasenbedingung nach der Wellenform-Synthese eines jeden Bandes und der Phasenbedingung der Referenzwellenform eines jeden Bandes verwendet wird; und
Überblenden von der Wellenform nach dem Syntheseprozess zu der erzeugten Phasensynchronisations-Wellenform in einem Phasensynchronisations-Verarbeitungszeitraum, sodass eine Phasenveränderung, die bei der Wellenform-Synthese auftritt, im Phasensynchronisations-Verarbeitungszeitraum zurückgesetzt wird.

**4.** Audiowellenform-Verarbeitungsverfahren nach Anspruch 3, **dadurch gekennzeichnet, dass**:

bei der Frequenzbandunterteilung des Verfahrens die Audiowellenform verarbeitet wird, indem sie wie sie ist als ein Band betrachtet wird, ohne die Bandunterteilung durchzuführen.

**5.** Computerprogramm, das eine Anweisungsgruppe umfasst, um einen Computer dazu zu veranlassen, das Audiowellenform-Verarbeitungsverfahren nach einem der Ansprüche 3 und 4 durchzuführen.

## Revendications

**1.** Dispositif de traitement de forme d'onde audio pour effectuer une analyse fréquentielle sur une forme d'onde audio et effectuer un processus de synthèse d'onde sinusoïdale ou cosinusoïdale sur chaque composante fréquentielle tout en effectuant une compression ou une expansion temporelle et une conversion de hauteur tonale comme exigé, **caractérisé en ce que** :

l'analyse fréquentielle est effectuée pour chaque bande d'un signal audio divisée en plusieurs bandes fréquentielles, le dispositif de traitement de forme d'onde audio comprenant :

des moyens de génération de forme d'onde de référence (13) agencés pour générer une forme d'onde de référence à partir d'une forme d'onde originale ;
des moyens de comparaison (14, 34) agencés pour faire une comparaison, en utilisant une fonction d'évaluation, entre une condition de phase après le processus de synthèse de forme d'onde de chaque bande et une condition de phase de la forme d'onde de référence de chaque bande pour générer une forme d'onde ayant une avance de phase linéaire ou un retard de phase linéaire par rapport à la forme d'onde originale fortement corrélée avec la condition de phase après le processus de synthèse en tant que forme d'onde de synchronisation de phase, dans lequel une distance sur un plan de nombres complexes entre les formes d'onde est utilisée comme fonction d'évaluation pour évaluer une différence entre la condition de phase après le processus de synthèse de forme d'onde de chaque bande et la condition de phase de la forme d'onde de référence de chaque bande ; et
des moyens de traitement (15, 35) agencés pour effectuer un fondu enchaîné à partir de la forme d'onde après le processus de synthèse sur la forme d'onde de synchronisation de phase générée dans une période de traitement de synchronisation de phase de sorte qu'un changement de phase se produisant sur la synthèse de forme d'onde est réinitialisé dans la période de traitement de synchronisation de phase.

**2.** Dispositif de traitement de forme d'onde audio selon la revendication 1, **caractérisé en ce que** :

dans la division de bande fréquentielle du dispositif, la forme d'onde audio est traitée en la considérant comme une bande telle quelle sans effectuer la division de la bande.

**3.** Procédé de traitement de forme d'onde audio pour effectuer une analyse fréquentielle sur une forme d'onde audio et effectuer un processus de synthèse d'onde sinusoïdale ou cosinusoïdale sur chaque composante fréquentielle tout en effectuant une compression ou une expansion temporelle et une conversion de hauteur tonale comme exigé, **caractérisé en ce que** :

l'analyse fréquentielle est effectuée pour chaque bande d'un signal audio divisée en plusieurs bandes de fréquence, le procédé de traitement de forme d'onde audio comprenant les étapes de :

génération d'une forme d'onde de référence à partir d'une forme d'onde originale ;
réalisation d'une comparaison, en utilisant une fonction d'évaluation, entre une condition de phase après le processus de synthèse de forme d'onde de chaque bande et une condition de phase de la forme d'onde de référence de chaque bande pour générer une forme d'onde ayant une avance de phase linéaire ou un retard de phase linéaire par rapport à la forme d'onde originale fortement corrélée avec la condition de phase après le processus de synthèse en tant que forme d'onde de synchronisation de phase, dans lequel une distance sur un plan de nombres complexes entre les formes d'onde est utilisée comme fonction d'évaluation pour évaluer une différence entre la condition de phase après le processus de synthèse de forme d'onde de chaque bande et la condition de phase de la forme d'onde de référence de chaque bande ; et
réalisation d'un fondu enchaîné de la forme d'onde après le processus de synthèse sur la forme d'onde de synchronisation de phase générée dans une période de traitement de synchronisation de phase de sorte qu'un changement de phase se produisant sur la synthèse de forme d'onde est réinitialisé dans la période de traitement de synchronisation de phase.

**4.** Procédé de traitement de forme d'onde audio selon la revendication 3, **caractérisé en ce que** :

dans la division de bande fréquentielle du procédé, la forme d'onde audio est traitée en la considérant comme une bande telle quelle sans effectuer la division de bande.

**5.** Programme informatique comprenant un groupe d'instructions pour amener un ordinateur à exécuter le procédé de traitement de forme d'onde audio selon l'une quelconque des revendications 3 et 4.

FIG.1

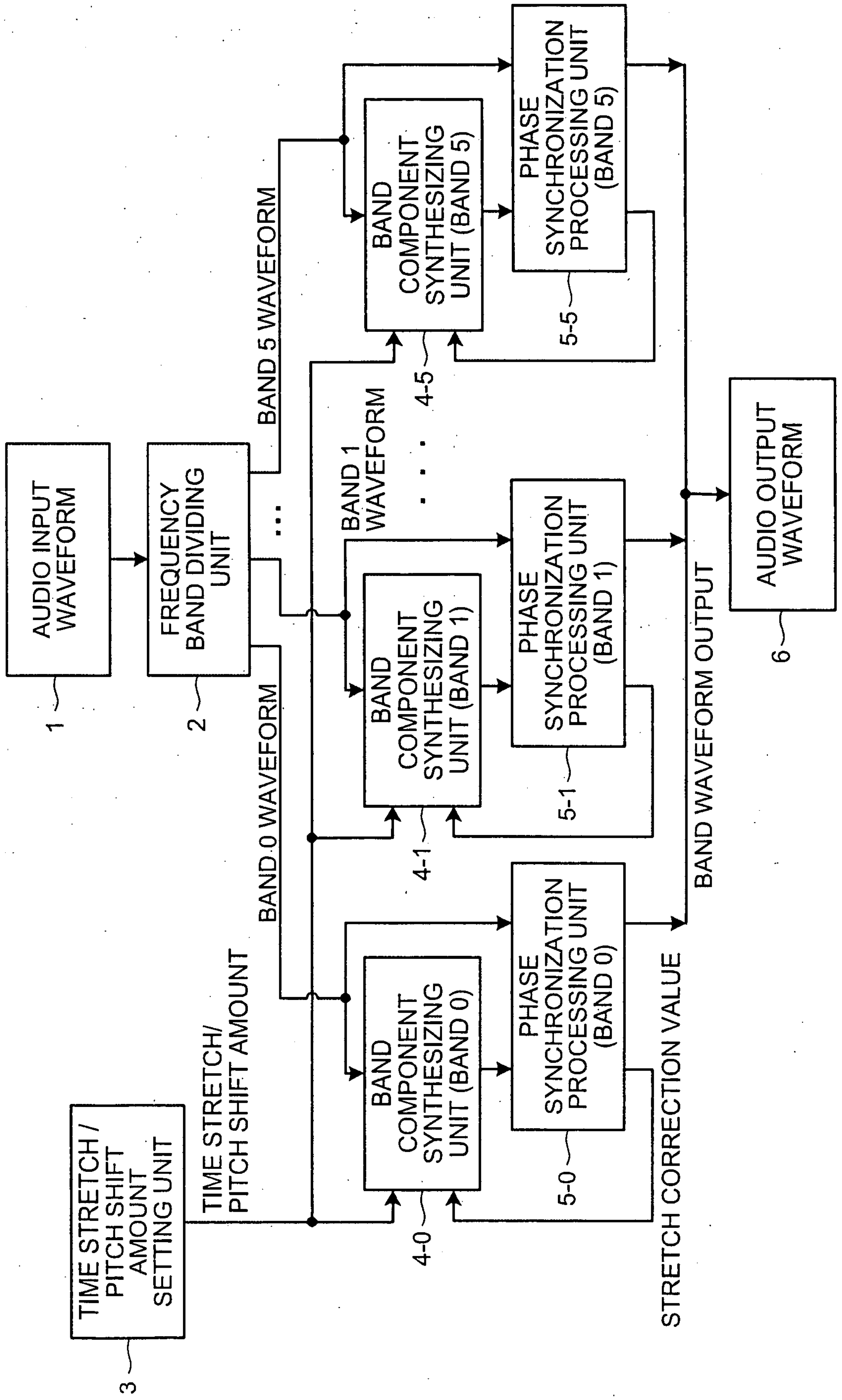
AUDIO INPUT WAVEFORM
1
FREQUENCY BAND DIVIDING UNIT
2
TIME STRETCH / PITCH SHIFT AMOUNT SETTING UNIT
3
TIME STRETCH/ PITCH SHIFT AMOUNT
BAND 0 WAVEFORM
BAND 1 WAVEFORM
BAND 5 WAVEFORM
BAND COMPONENT SYNTHESIZING UNIT (BAND 0)
4-0
BAND COMPONENT SYNTHESIZING UNIT (BAND 1)
4-1
BAND COMPONENT SYNTHESIZING UNIT (BAND 5)
4-5
PHASE SYNCHRONIZATION PROCESSING UNIT (BAND 0)
5-0
PHASE SYNCHRONIZATION PROCESSING UNIT (BAND 1)
5-1
PHASE SYNCHRONIZATION PROCESSING UNIT (BAND 5)
5-5
STRETCH CORRECTION VALUE
BAND WAVEFORM OUTPUT
AUDIO OUTPUT WAVEFORM
6

FIG.2

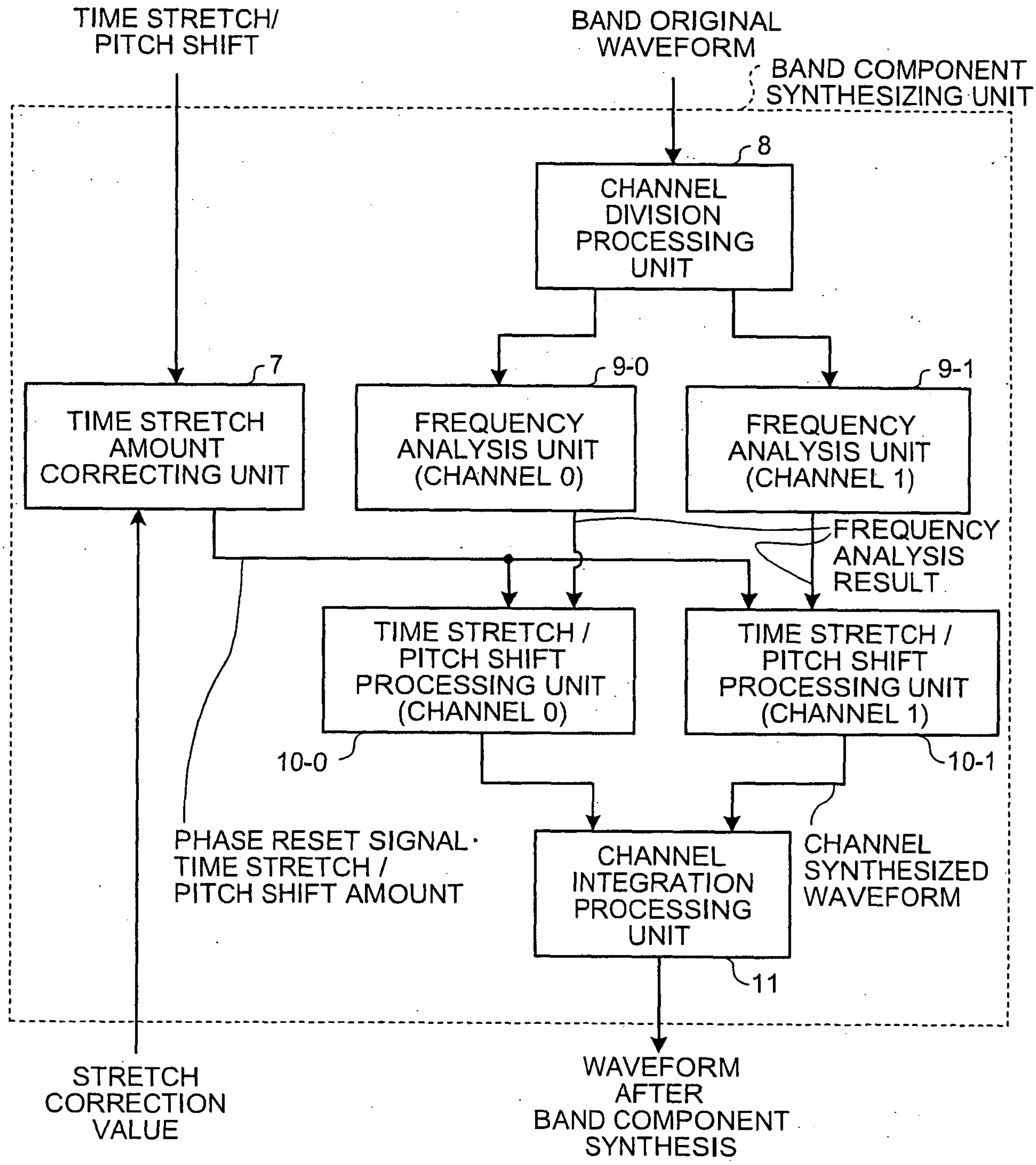
TIME STRETCH/ PITCH SHIFT
BAND ORIGINAL WAVEFORM
BAND COMPONENT SYNTHESIZING UNIT
8
CHANNEL DIVISION PROCESSING UNIT
7
TIME STRETCH AMOUNT CORRECTING UNIT
9-0
FREQUENCY ANALYSIS UNIT (CHANNEL 0)
9-1
FREQUENCY ANALYSIS UNIT (CHANNEL 1)
FREQUENCY ANALYSIS RESULT
TIME STRETCH / PITCH SHIFT PROCESSING UNIT (CHANNEL 0)
TIME STRETCH / PITCH SHIFT PROCESSING UNIT (CHANNEL 1)
10-0
10-1
PHASE RESET SIGNAL · TIME STRETCH / PITCH SHIFT AMOUNT
CHANNEL INTEGRATION PROCESSING UNIT
CHANNEL SYNTHESIZED WAVEFORM
11
STRETCH CORRECTION VALUE
WAVEFORM AFTER BAND COMPONENT SYNTHESIS

FIG.3

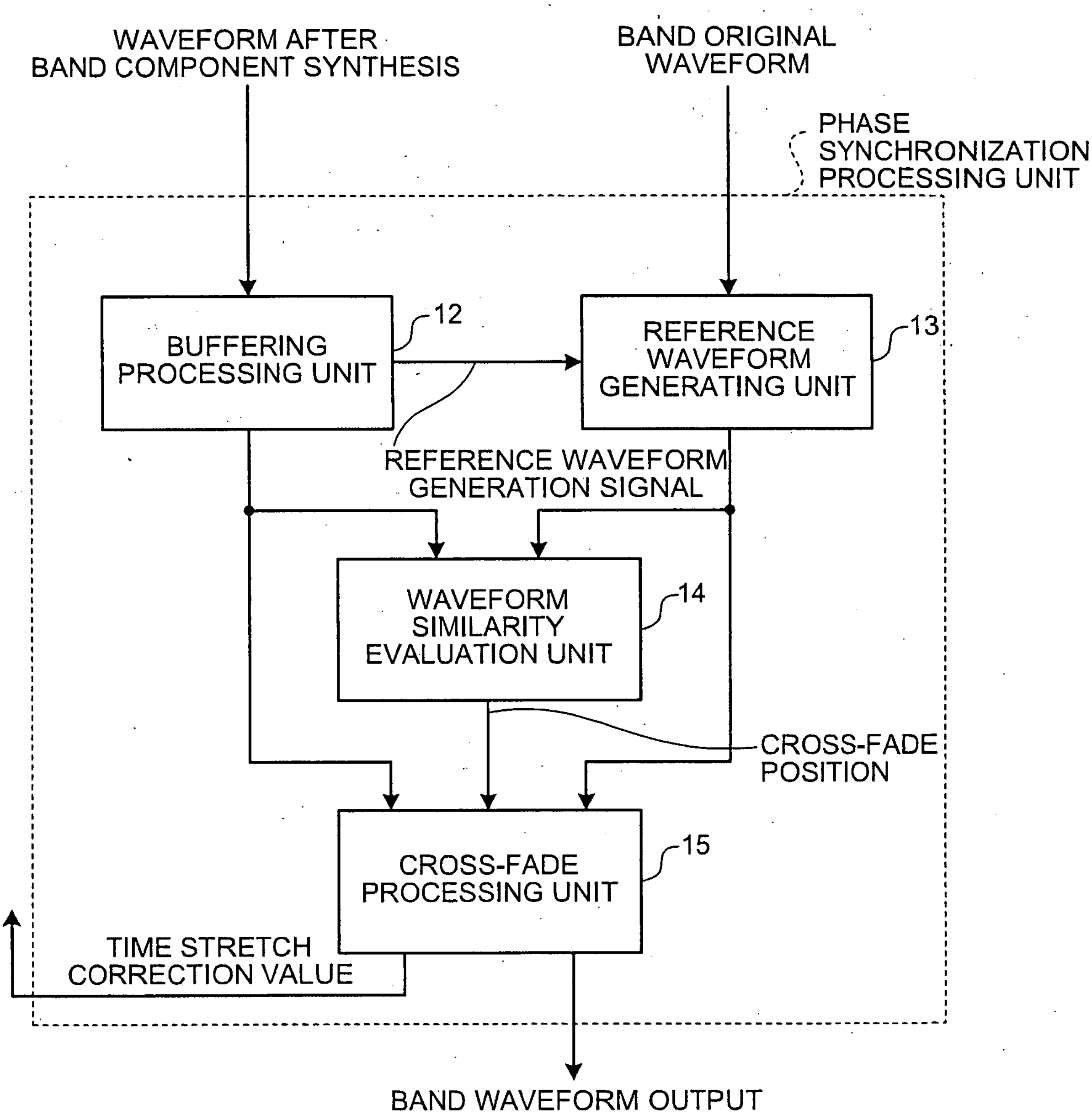
WAVEFORM AFTER
BAND COMPONENT SYNTHESIS
BAND ORIGINAL
WAVEFORM
PHASE
SYNCHRONIZATION
PROCESSING UNIT
BUFFERING
PROCESSING UNIT
12
REFERENCE
WAVEFORM
GENERATING UNIT
13
REFERENCE WAVEFORM
GENERATION SIGNAL
WAVEFORM
SIMILARITY
EVALUATION UNIT
14
CROSS-FADE
POSITION
CROSS-FADE
PROCESSING UNIT
15
TIME STRETCH
CORRECTION VALUE
BAND WAVEFORM OUTPUT

# FIG.4A

BAND ORIGINAL WAVEFORM AND TIMING OF PHASE SYNCHRONIZATION

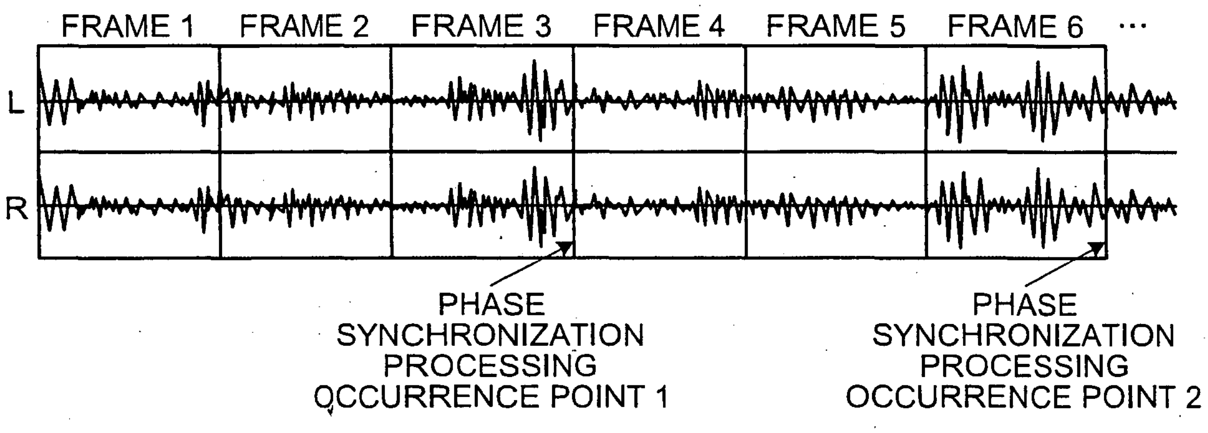


# FIG.4B

REFERENCE WAVEFORM GENERATION WITH NO PITCH SHIFT

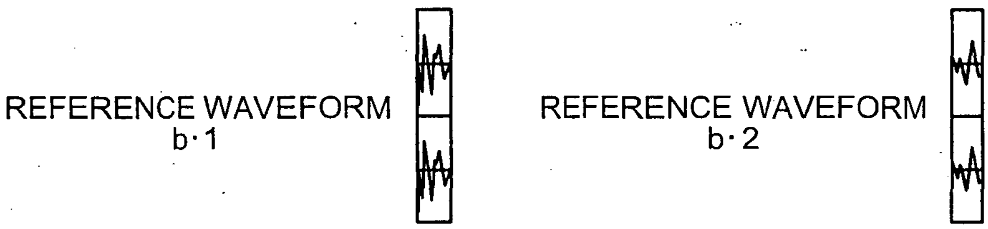


# FIG.4C

REFERENCE WAVEFORM GENERATION WITH PITCH SHIFT

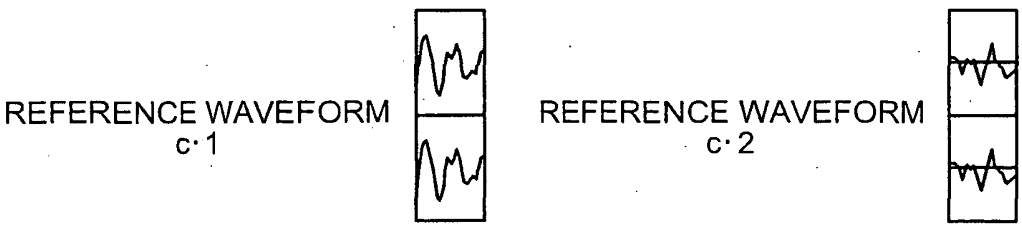

FIG.5

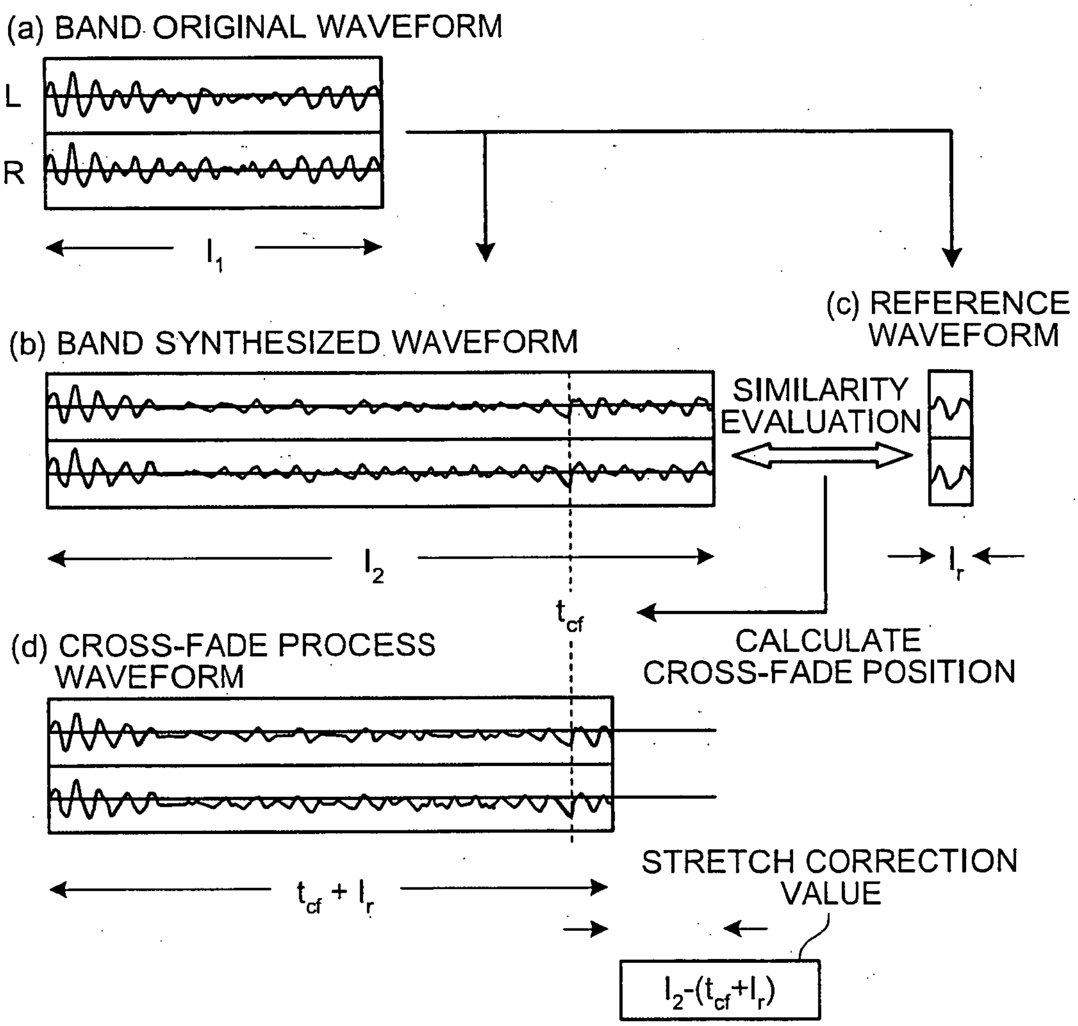

(a) BAND ORIGINAL WAVEFORM
L
R
l1
(b) BAND SYNTHESIZED WAVEFORM
l2
(c) REFERENCE WAVEFORM
SIMILARITY EVALUATION
lr
tcf
CALCULATE CROSS-FADE POSITION
(d) CROSS-FADE PROCESS WAVEFORM
tcf + lr
STRETCH CORRECTION VALUE
l2-(tcf+lr)

FIG.6

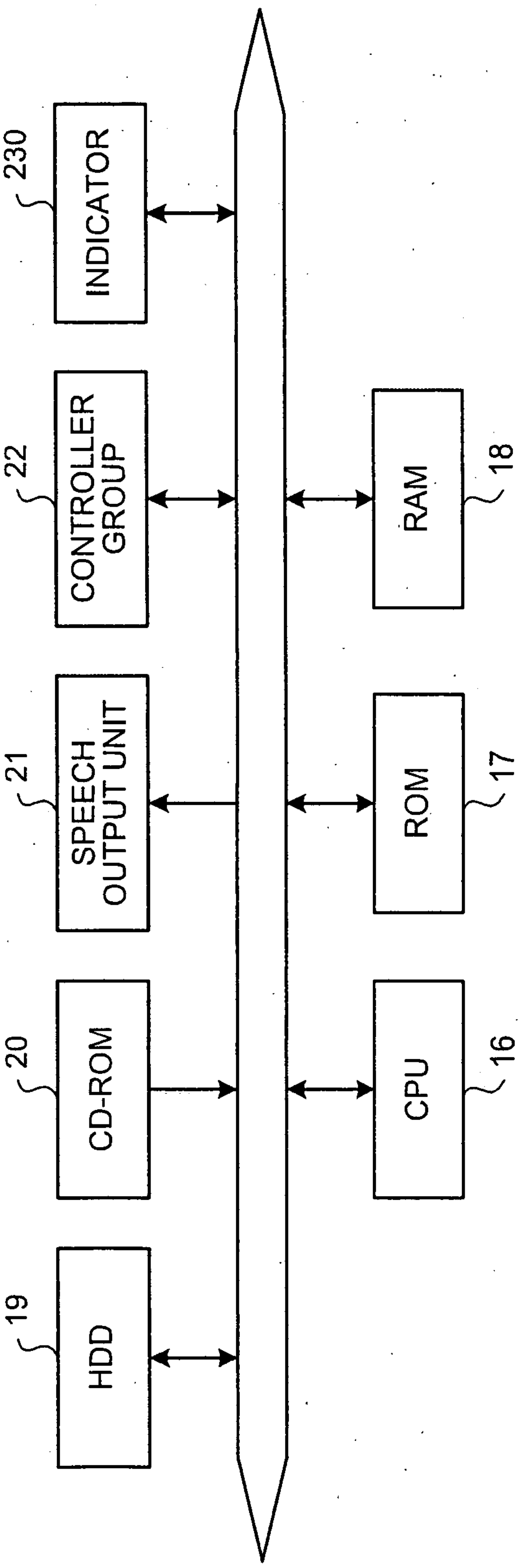
230
INDICATOR
22
CONTROLLER GROUP
21
SPEECH OUTPUT UNIT
20
CD-ROM
19
HDD
RAM
18
ROM
17
CPU
16

FIG.7A

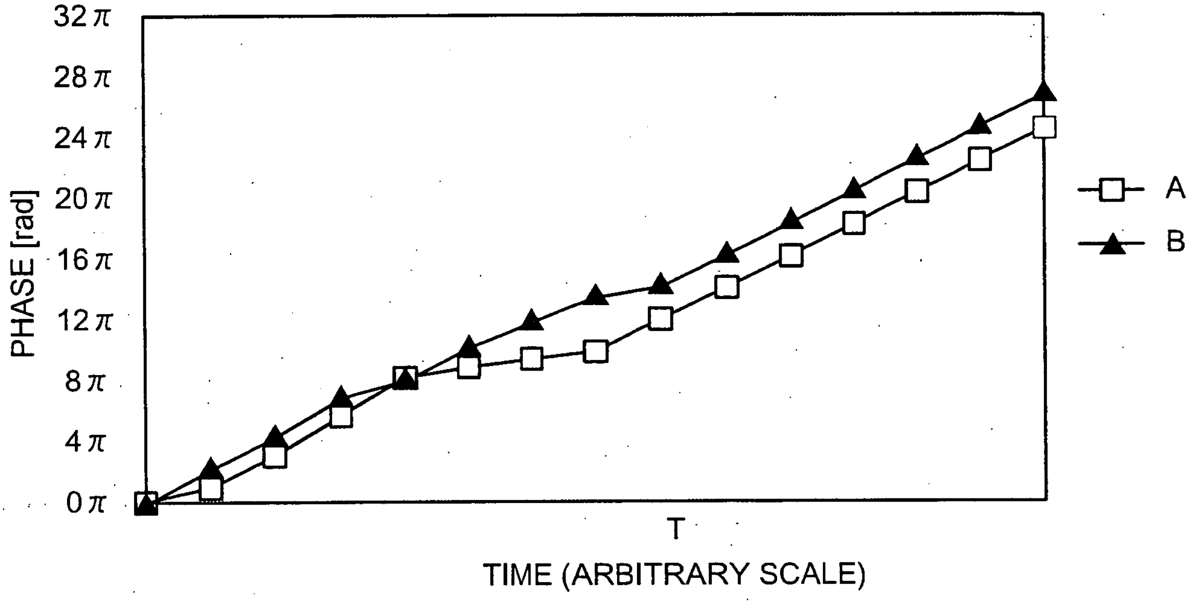
32 π
28 π
24 π
20 π
16 π
12 π
8 π
4 π
0 π
PHASE [rad]
T
TIME (ARBITRARY SCALE)
A
B

FIG.7B

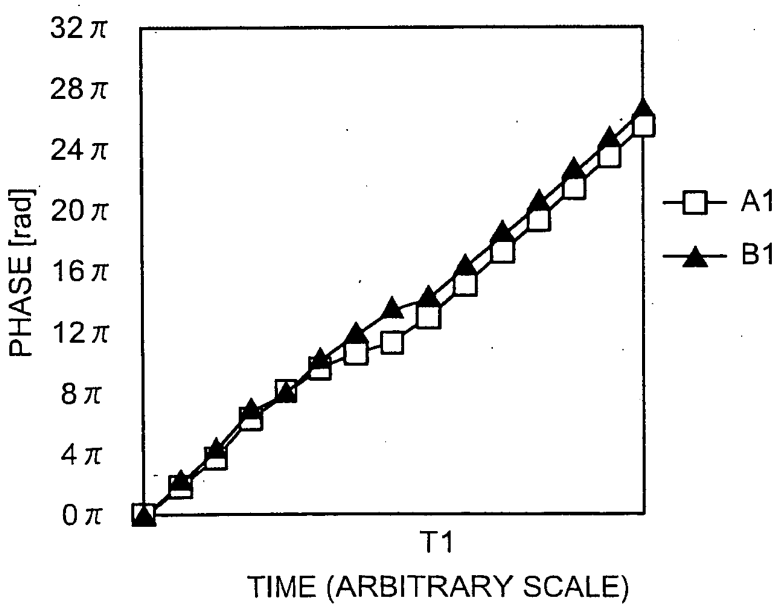
32 π
28 π
24 π
20 π
16 π
12 π
8 π
4 π
0 π
PHASE [rad]
T1
TIME (ARBITRARY SCALE)
A1
B1

FIG.8A

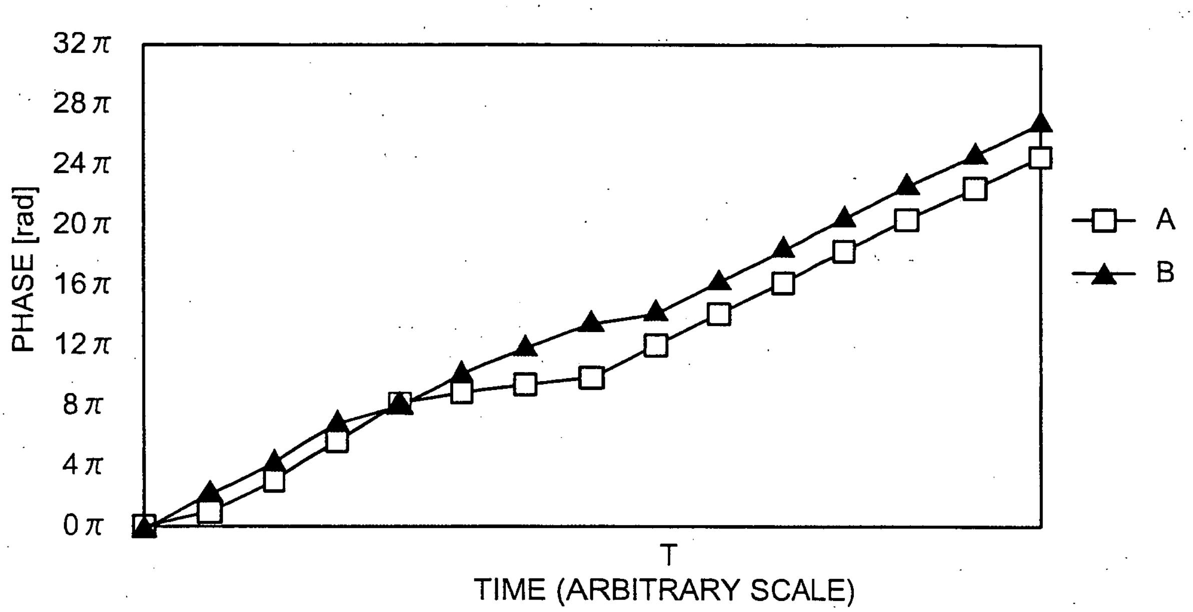
32π
28π
24π
20π
16π
12π
8π
4π
0π
PHASE [rad]
A
B
T
TIME (ARBITRARY SCALE)

FIG.8B

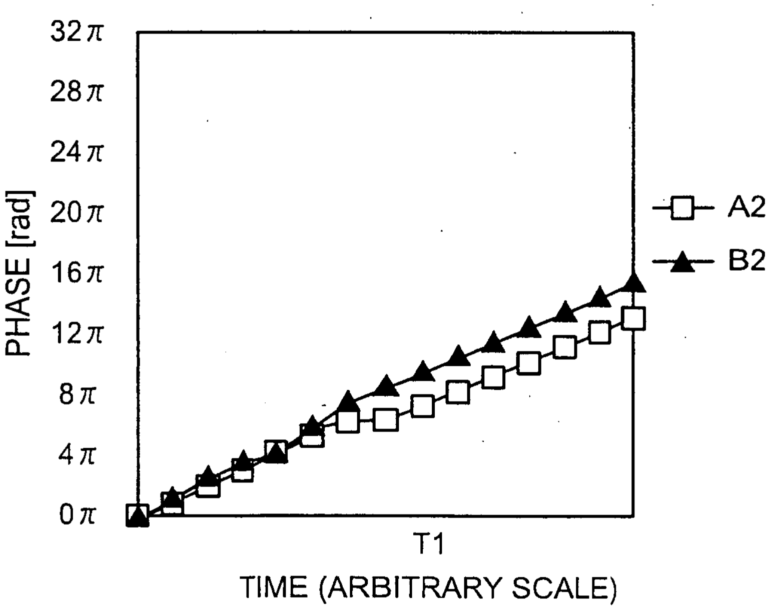
32π
28π
24π
20π
16π
12π
8π
4π
0π
PHASE [rad]
A2
B2
T1
TIME (ARBITRARY SCALE)

FIG.9

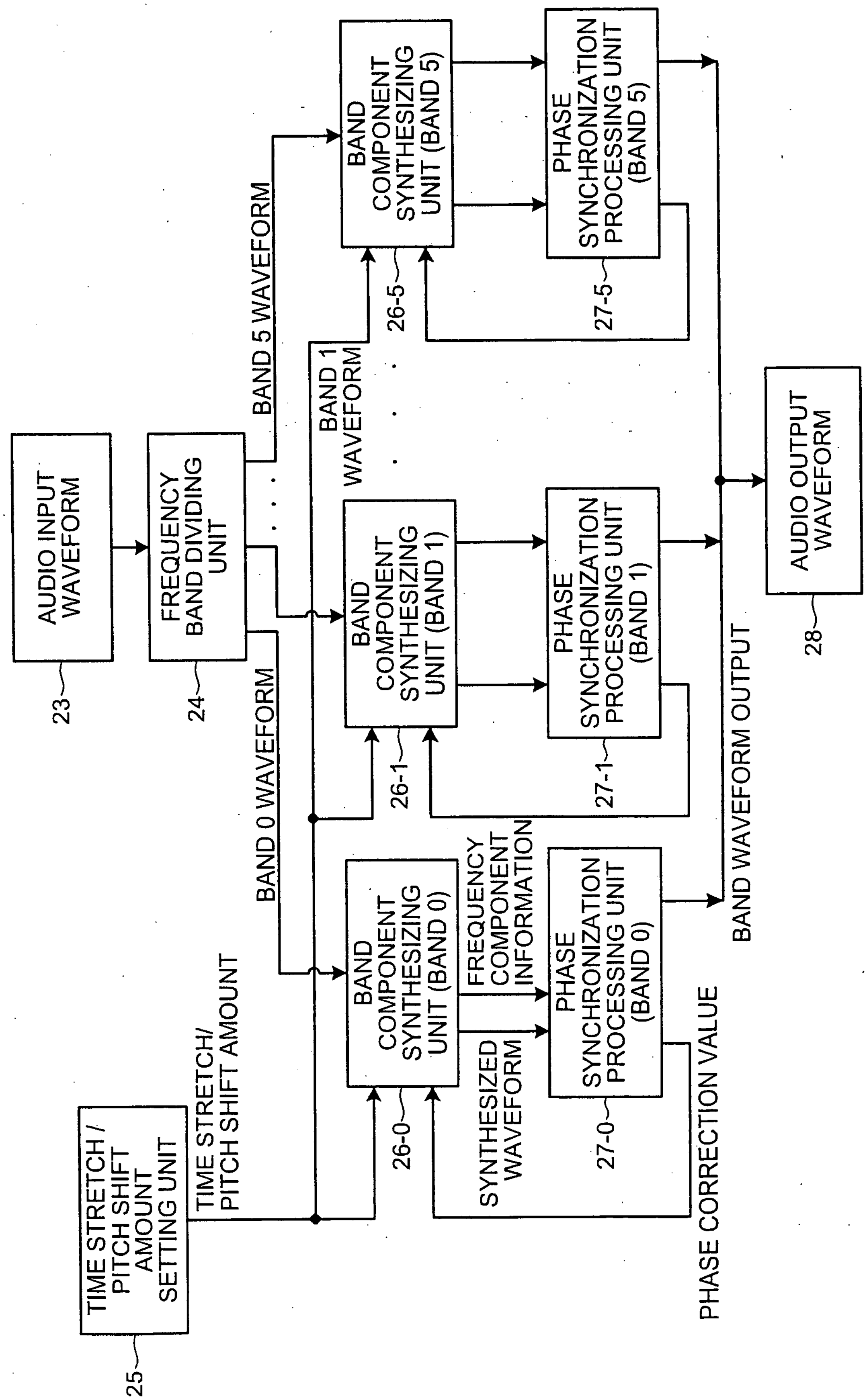
AUDIO INPUT WAVEFORM
23
FREQUENCY BAND DIVIDING UNIT
24
TIME STRETCH / PITCH SHIFT AMOUNT SETTING UNIT
25
TIME STRETCH/ PITCH SHIFT AMOUNT
BAND 0 WAVEFORM
BAND 1 WAVEFORM
BAND 5 WAVEFORM
BAND COMPONENT SYNTHESIZING UNIT (BAND 0)
26-0
BAND COMPONENT SYNTHESIZING UNIT (BAND 1)
26-1
BAND COMPONENT SYNTHESIZING UNIT (BAND 5)
26-5
FREQUENCY COMPONENT INFORMATION
SYNTHESIZED WAVEFORM
PHASE SYNCHRONIZATION PROCESSING UNIT (BAND 0)
27-0
PHASE SYNCHRONIZATION PROCESSING UNIT (BAND 1)
27-1
PHASE SYNCHRONIZATION PROCESSING UNIT (BAND 5)
27-5
PHASE CORRECTION VALUE
BAND WAVEFORM OUTPUT
AUDIO OUTPUT WAVEFORM
28

FIG.10

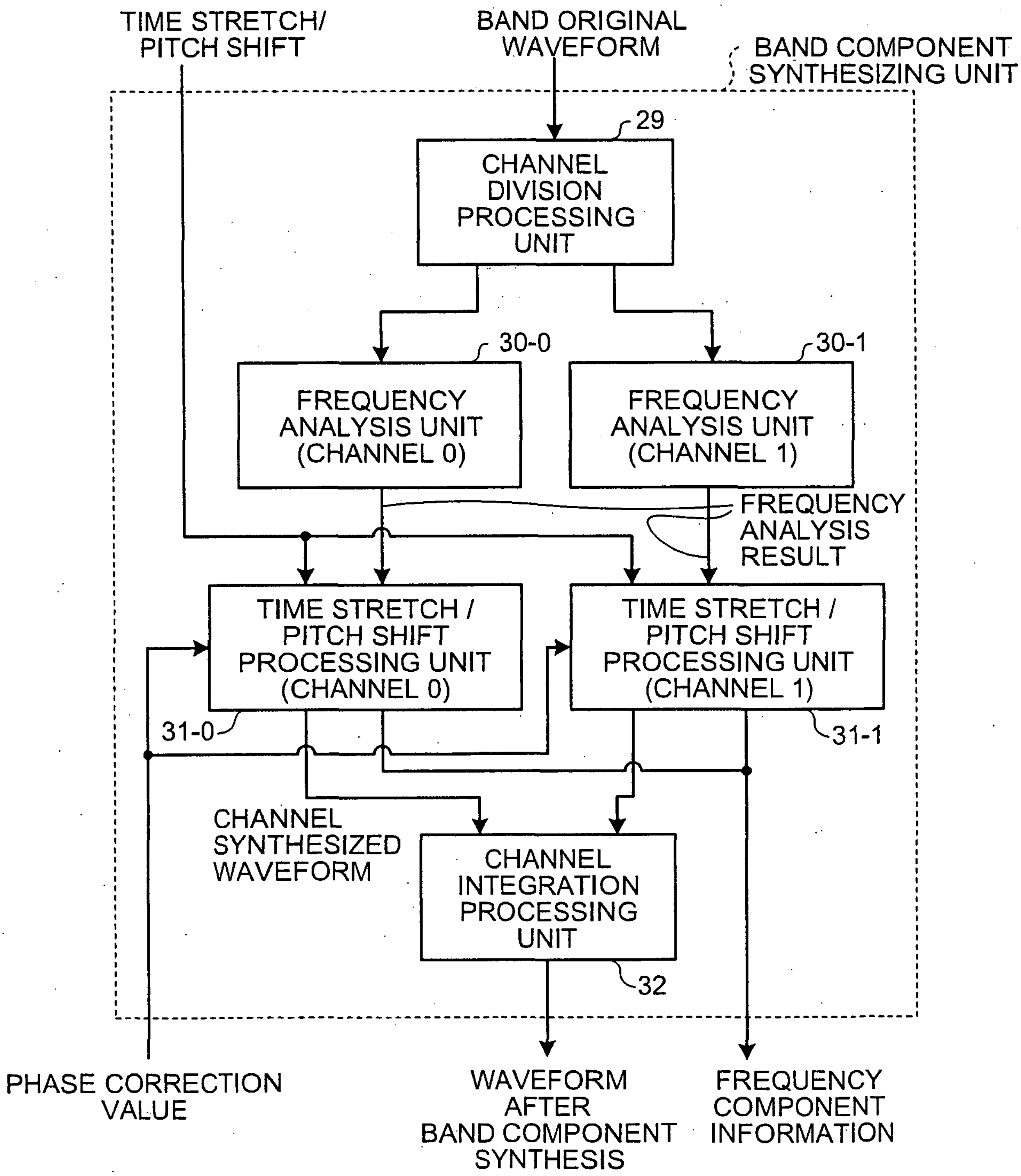
TIME STRETCH/
PITCH SHIFT
BAND ORIGINAL
WAVEFORM
BAND COMPONENT
SYNTHESIZING UNIT
29
CHANNEL
DIVISION
PROCESSING
UNIT
30-0
30-1
FREQUENCY
ANALYSIS UNIT
(CHANNEL 0)
FREQUENCY
ANALYSIS UNIT
(CHANNEL 1)
FREQUENCY
ANALYSIS
RESULT
TIME STRETCH /
PITCH SHIFT
PROCESSING UNIT
(CHANNEL 0)
TIME STRETCH /
PITCH SHIFT
PROCESSING UNIT
(CHANNEL 1)
31-0
31-1
CHANNEL
SYNTHESIZED
WAVEFORM
CHANNEL
INTEGRATION
PROCESSING
UNIT
32
PHASE CORRECTION
VALUE
WAVEFORM
AFTER
BAND COMPONENT
SYNTHESIS
FREQUENCY
COMPONENT
INFORMATION

FIG.11

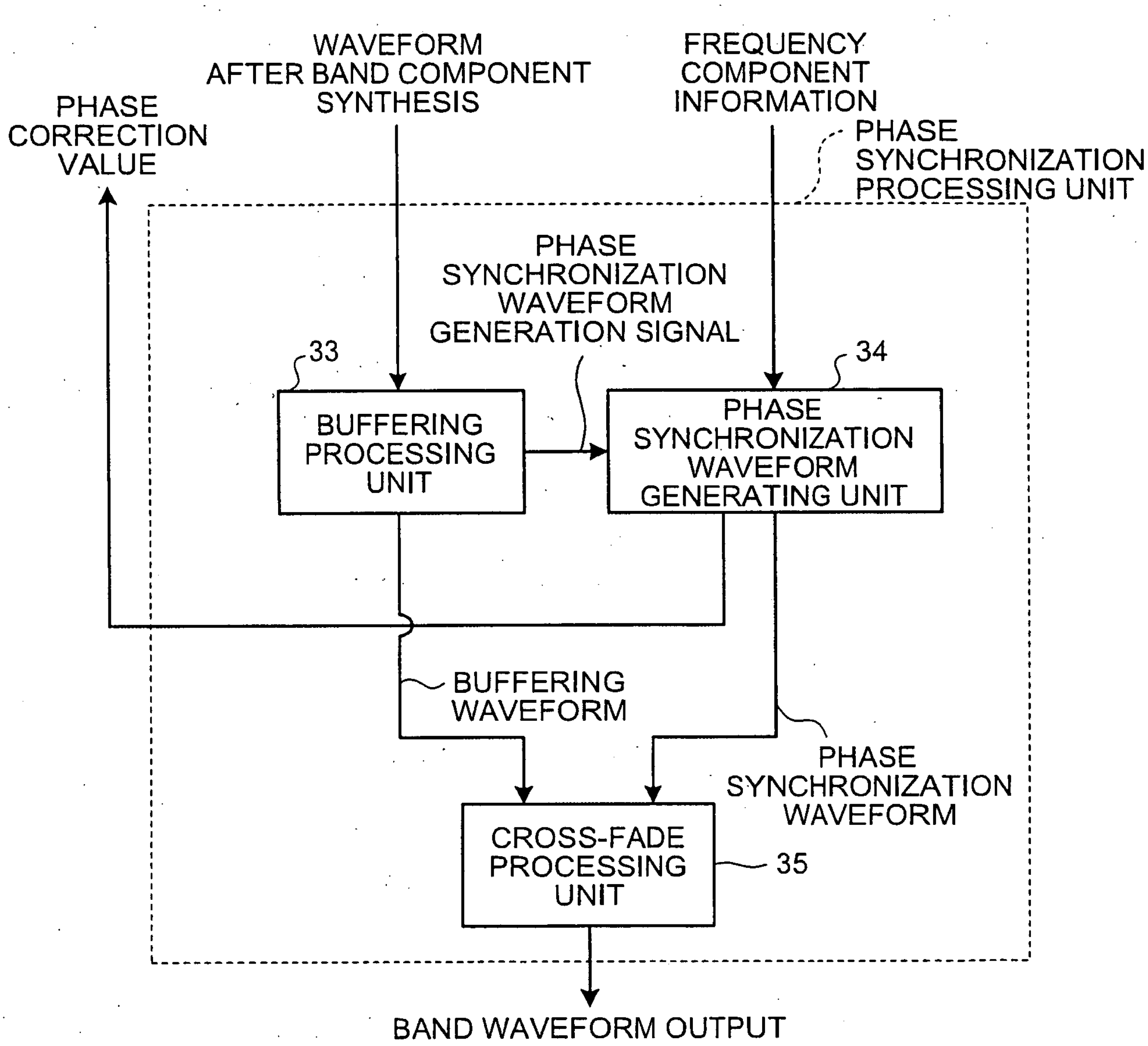
WAVEFORM
AFTER BAND COMPONENT
SYNTHESIS
FREQUENCY
COMPONENT
INFORMATION
PHASE
CORRECTION
VALUE
PHASE
SYNCHRONIZATION
PROCESSING UNIT
PHASE
SYNCHRONIZATION
WAVEFORM
GENERATION SIGNAL
33
34
BUFFERING
PROCESSING
UNIT
PHASE
SYNCHRONIZATION
WAVEFORM
GENERATING UNIT
BUFFERING
WAVEFORM
PHASE
SYNCHRONIZATION
WAVEFORM
CROSS-FADE
PROCESSING
UNIT
35
BAND WAVEFORM OUTPUT

FIG.12

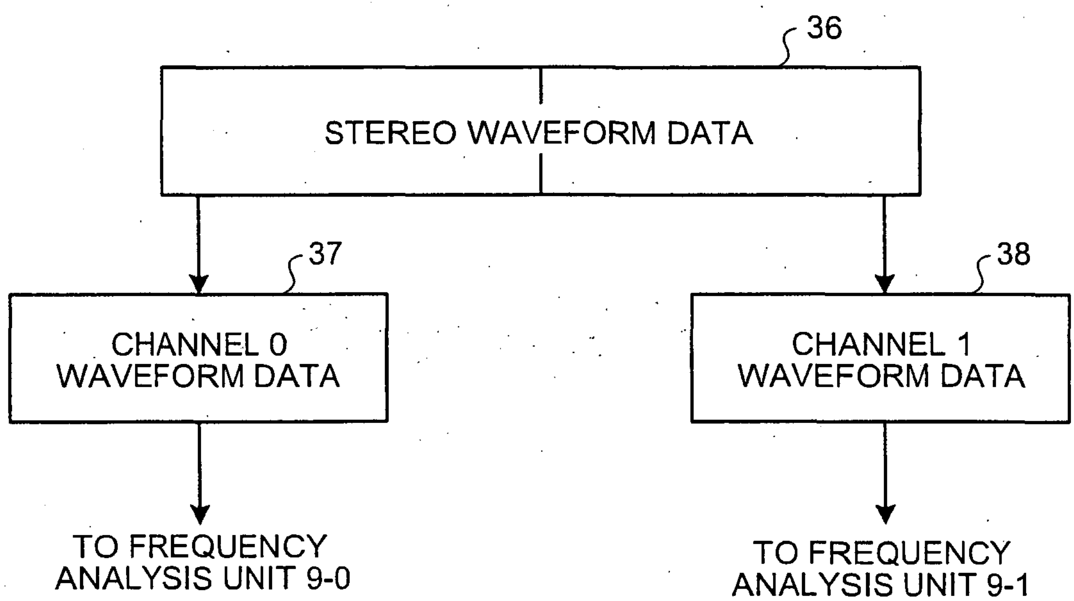
36
STEREO WAVEFORM DATA
37
CHANNEL 0
WAVEFORM DATA
38
CHANNEL 1
WAVEFORM DATA
TO FREQUENCY
ANALYSIS UNIT 9-0
TO FREQUENCY
ANALYSIS UNIT 9-1

FIG.13

| ADDRESS | START OF FRAME | | END OF FRAME | | INSTANTANEOUS ANGULAR FREQUENCY |
|---|---|---|---|---|---|
| | AMPLITUDE | PHASE | AMPLITUDE | PHASE | |
| addr (0) | AS00 | PS00 | AE00 | PE00 | W00 |
| addr (1) | AS01 | PS01 | AE01 | PE01 | W01 |
| addr (2) | AS02 | PS02 | AE02 | PE02 | W02 |
| addr (3) | AS03 | PS03 | AE03 | PE03 | W03 |
| | | | | | |
| addr (11) | AS11 | PS11 | AE11 | PE11 | W11 |

FIG.14

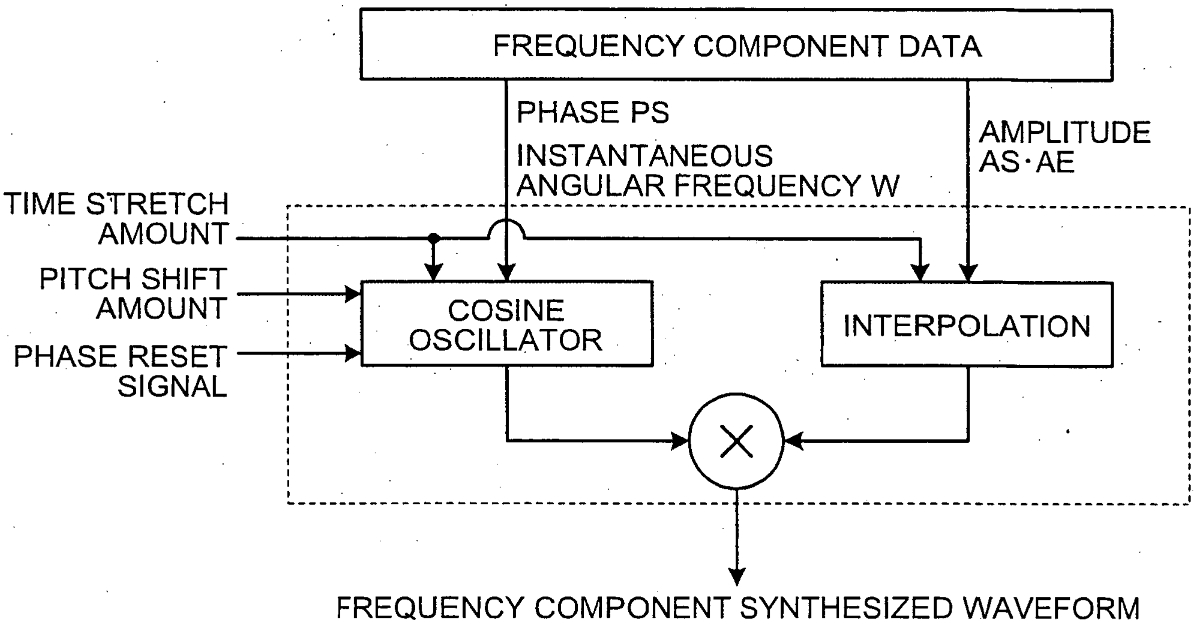
FREQUENCY COMPONENT DATA
PHASE PS
INSTANTANEOUS ANGULAR FREQUENCY W
AMPLITUDE AS·AE
TIME STRETCH AMOUNT
PITCH SHIFT AMOUNT
PHASE RESET SIGNAL
COSINE OSCILLATOR
INTERPOLATION
FREQUENCY COMPONENT SYNTHESIZED WAVEFORM

FIG.15

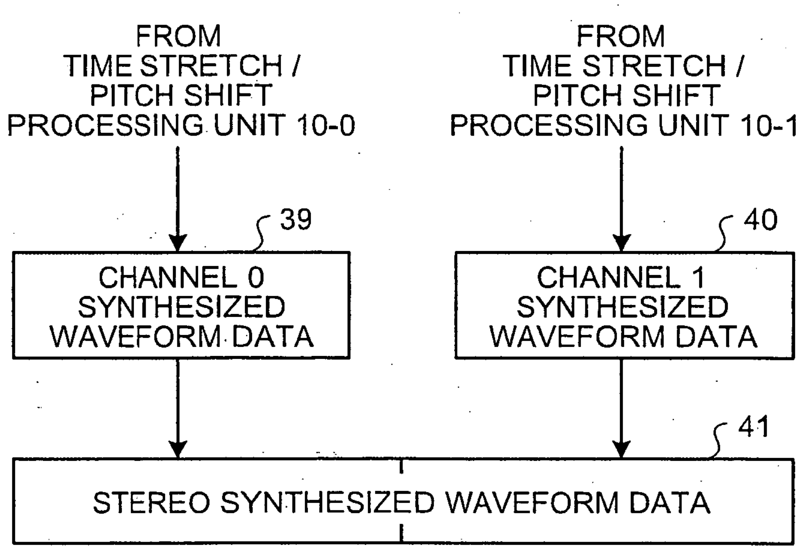
FROM TIME STRETCH / PITCH SHIFT PROCESSING UNIT 10-0
FROM TIME STRETCH / PITCH SHIFT PROCESSING UNIT 10-1
39
40
CHANNEL 0 SYNTHESIZED WAVEFORM DATA
CHANNEL 1 SYNTHESIZED WAVEFORM DATA
41
STEREO SYNTHESIZED WAVEFORM DATA

FIG.16

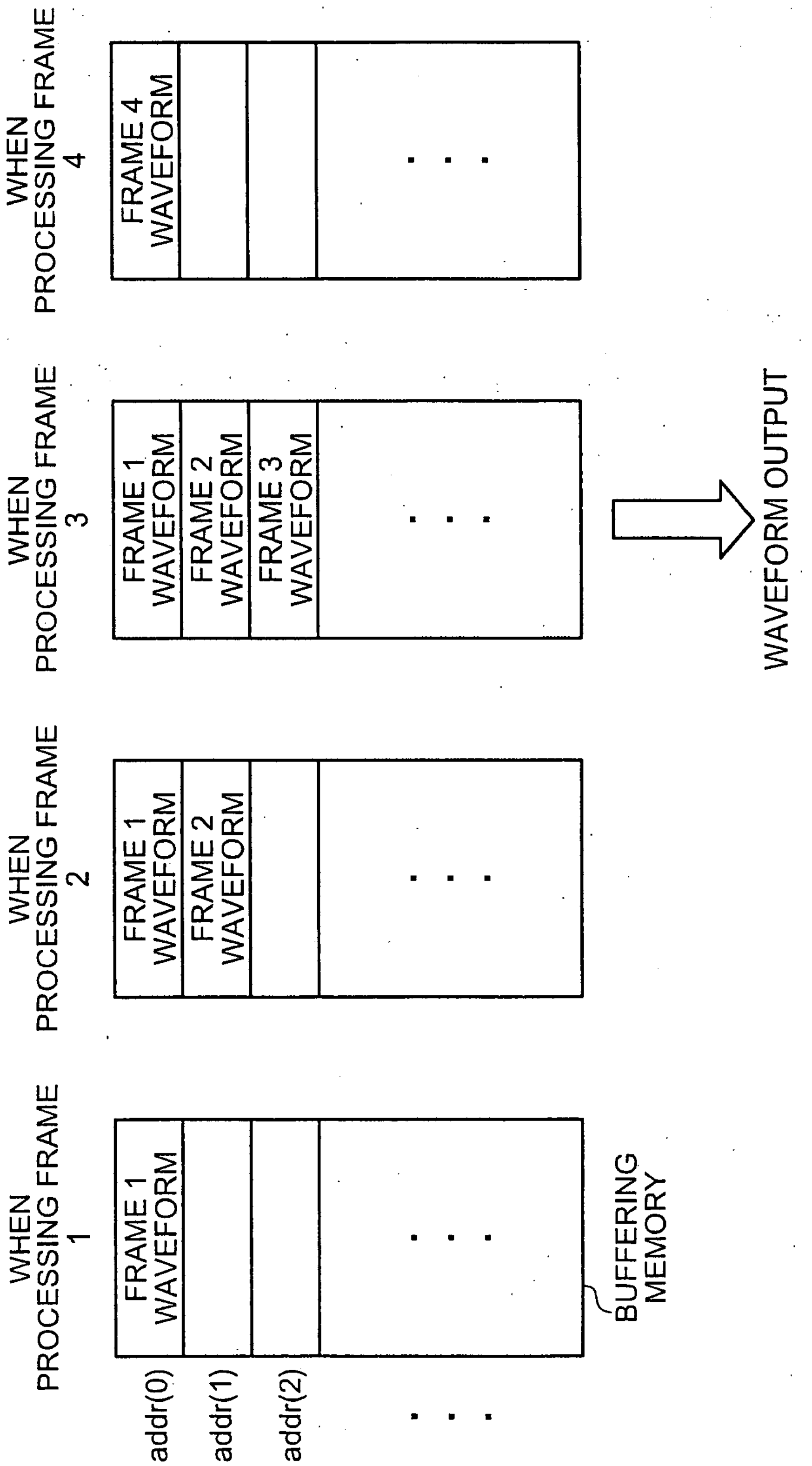
WHEN PROCESSING FRAME 1
FRAME 1 WAVEFORM
addr(0)
addr(1)
addr(2)
BUFFERING MEMORY
WHEN PROCESSING FRAME 2
FRAME 1 WAVEFORM
FRAME 2 WAVEFORM
WHEN PROCESSING FRAME 3
FRAME 1 WAVEFORM
FRAME 2 WAVEFORM
FRAME 3 WAVEFORM
WAVEFORM OUTPUT
WHEN PROCESSING FRAME 4
FRAME 4 WAVEFORM

FIG.17

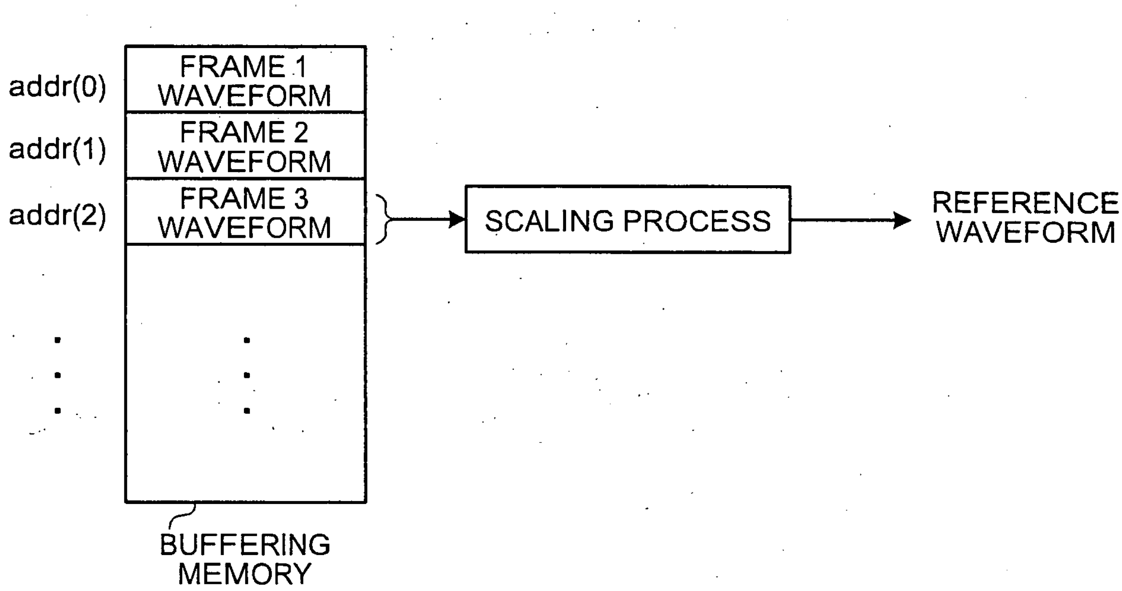
addr(0)
FRAME 1 WAVEFORM
addr(1)
FRAME 2 WAVEFORM
addr(2)
FRAME 3 WAVEFORM
SCALING PROCESS
REFERENCE WAVEFORM
BUFFERING MEMORY

FIG.18

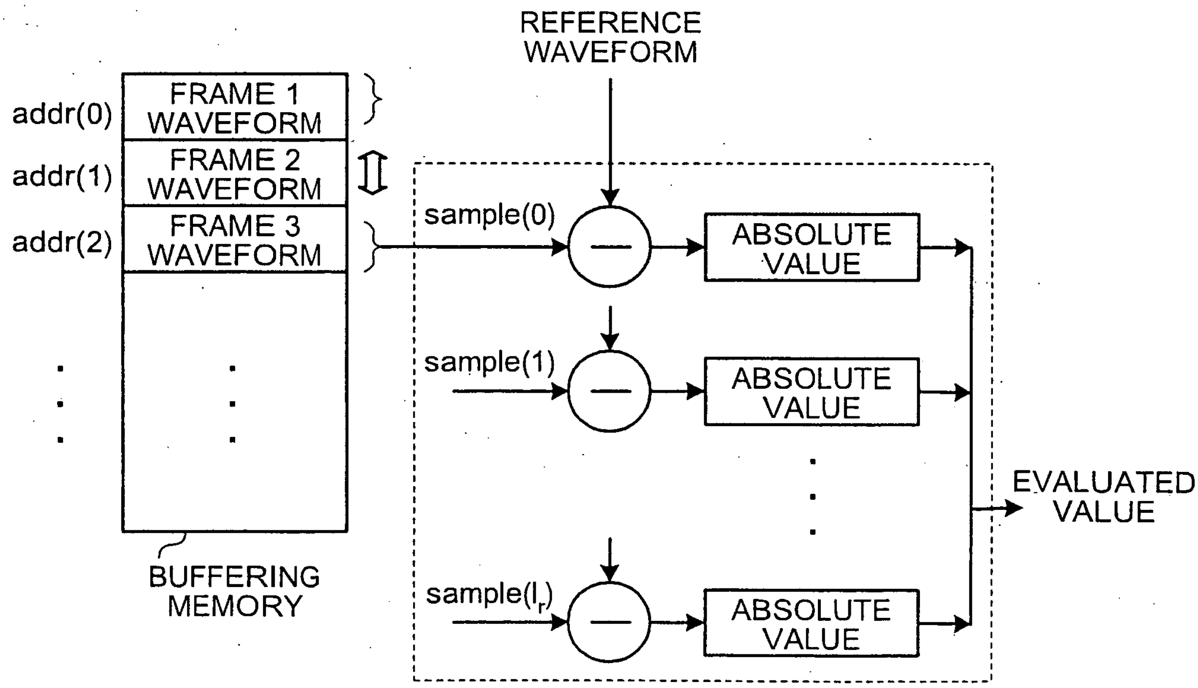
REFERENCE WAVEFORM
addr(0)
FRAME 1 WAVEFORM
addr(1)
FRAME 2 WAVEFORM
addr(2)
FRAME 3 WAVEFORM
sample(0)
ABSOLUTE VALUE
sample(1)
ABSOLUTE VALUE
sample($l_r$)
ABSOLUTE VALUE
EVALUATED VALUE
BUFFERING MEMORY

FIG.19

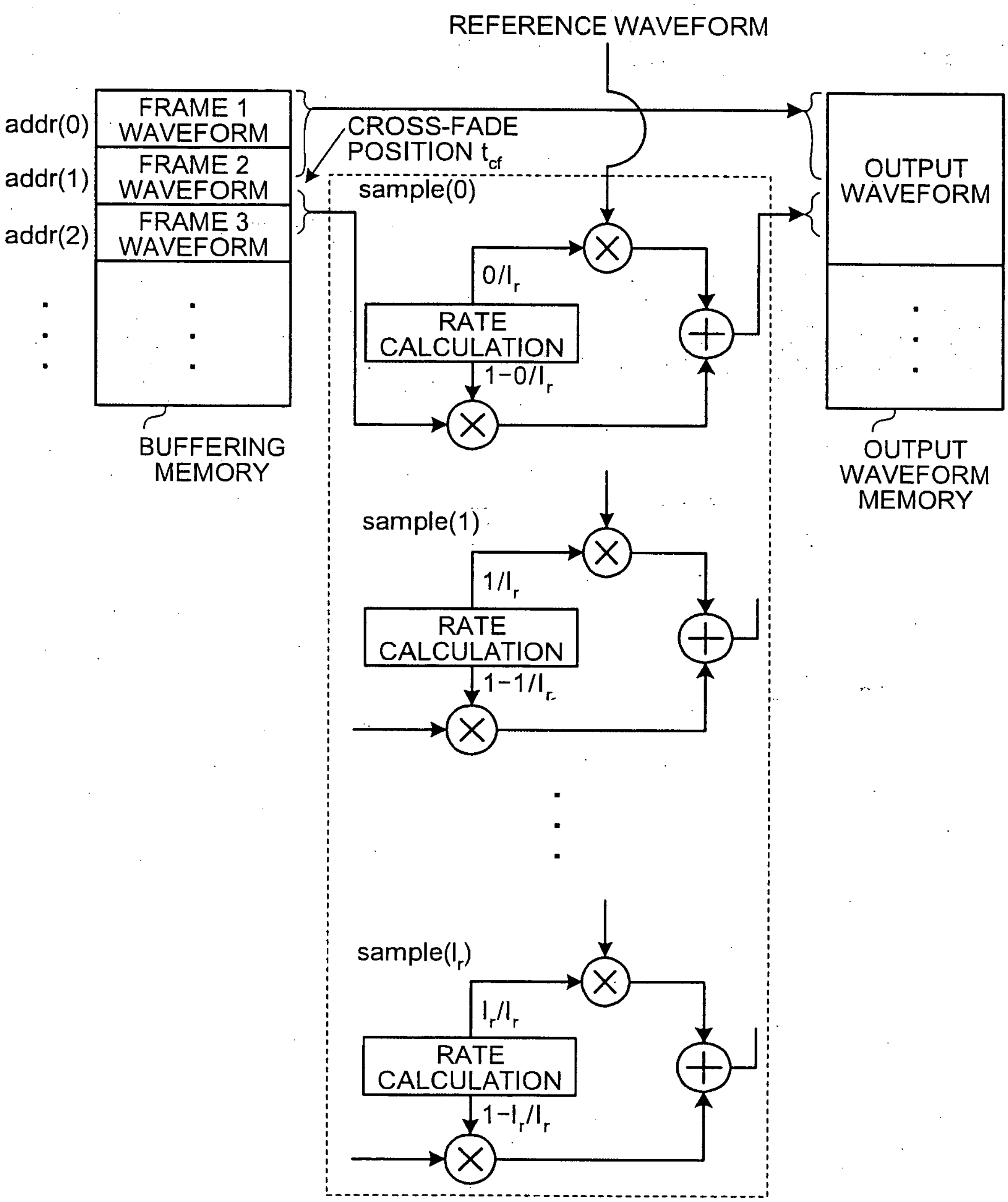
REFERENCE WAVEFORM
addr(0)
FRAME 1 WAVEFORM
addr(1)
FRAME 2 WAVEFORM
addr(2)
FRAME 3 WAVEFORM
BUFFERING MEMORY
CROSS-FADE POSITION $t_{cf}$
sample(0)
$0/l_r$
RATE CALCULATION
$1-0/l_r$
sample(1)
$1/l_r$
RATE CALCULATION
$1-1/l_r$
sample($l_r$)
$l_r/l_r$
RATE CALCULATION
$1-l_r/l_r$
OUTPUT WAVEFORM
OUTPUT WAVEFORM MEMORY

FIG.20

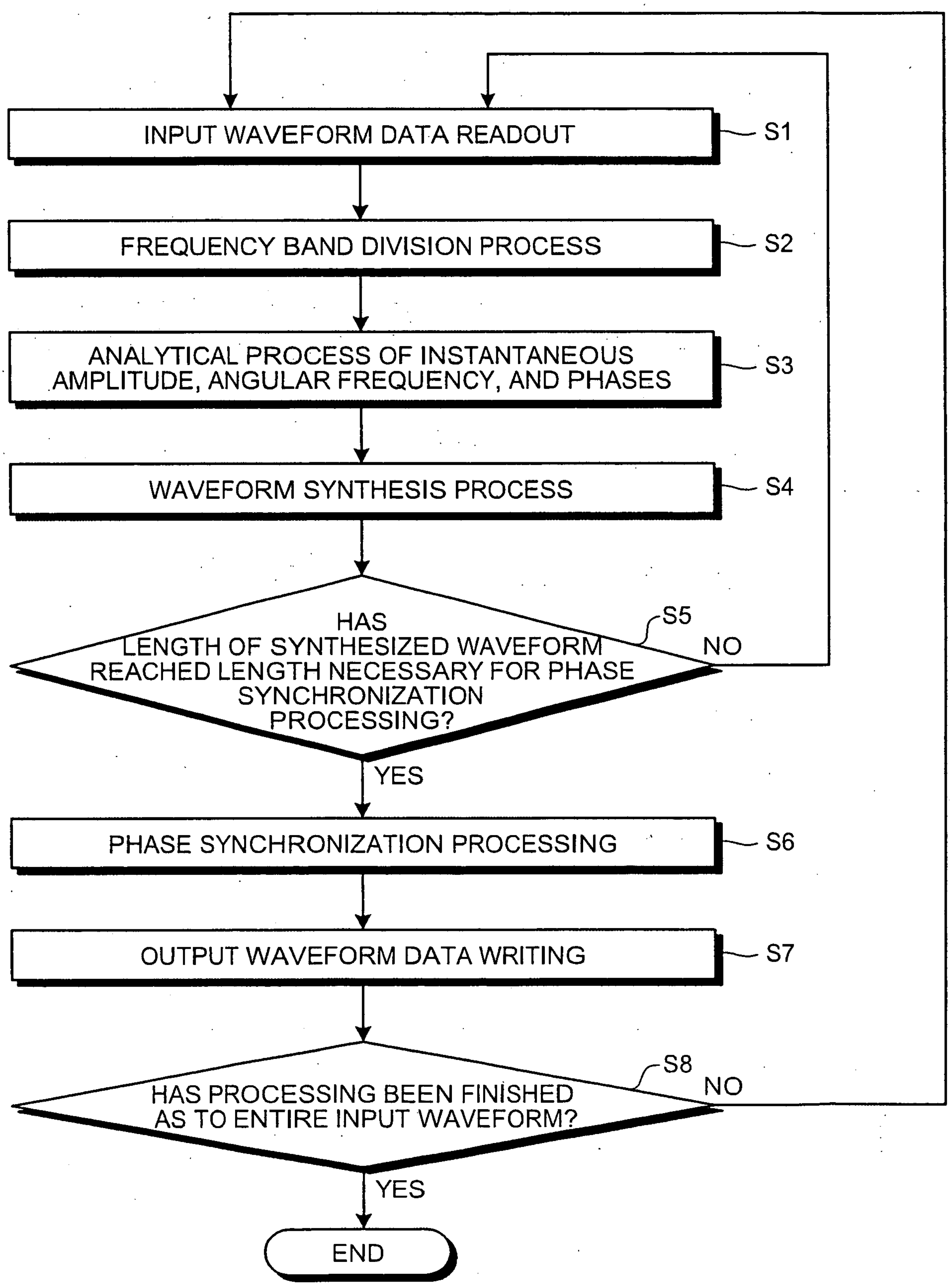
INPUT WAVEFORM DATA READOUT
S1
FREQUENCY BAND DIVISION PROCESS
S2
ANALYTICAL PROCESS OF INSTANTANEOUS AMPLITUDE, ANGULAR FREQUENCY, AND PHASES
S3
WAVEFORM SYNTHESIS PROCESS
S4
HAS LENGTH OF SYNTHESIZED WAVEFORM REACHED LENGTH NECESSARY FOR PHASE SYNCHRONIZATION PROCESSING?
S5
NO
YES
PHASE SYNCHRONIZATION PROCESSING
S6
OUTPUT WAVEFORM DATA WRITING
S7
HAS PROCESSING BEEN FINISHED AS TO ENTIRE INPUT WAVEFORM?
S8
NO
YES
END

FIG.21

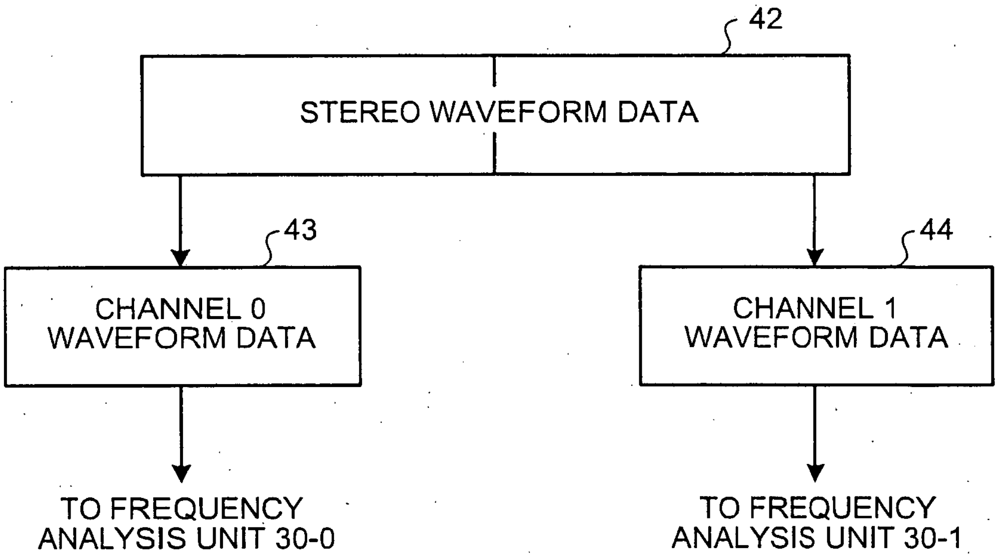
42
STEREO WAVEFORM DATA
43
CHANNEL 0
WAVEFORM DATA
44
CHANNEL 1
WAVEFORM DATA
TO FREQUENCY
ANALYSIS UNIT 30-0
TO FREQUENCY
ANALYSIS UNIT 30-1

FIG.22

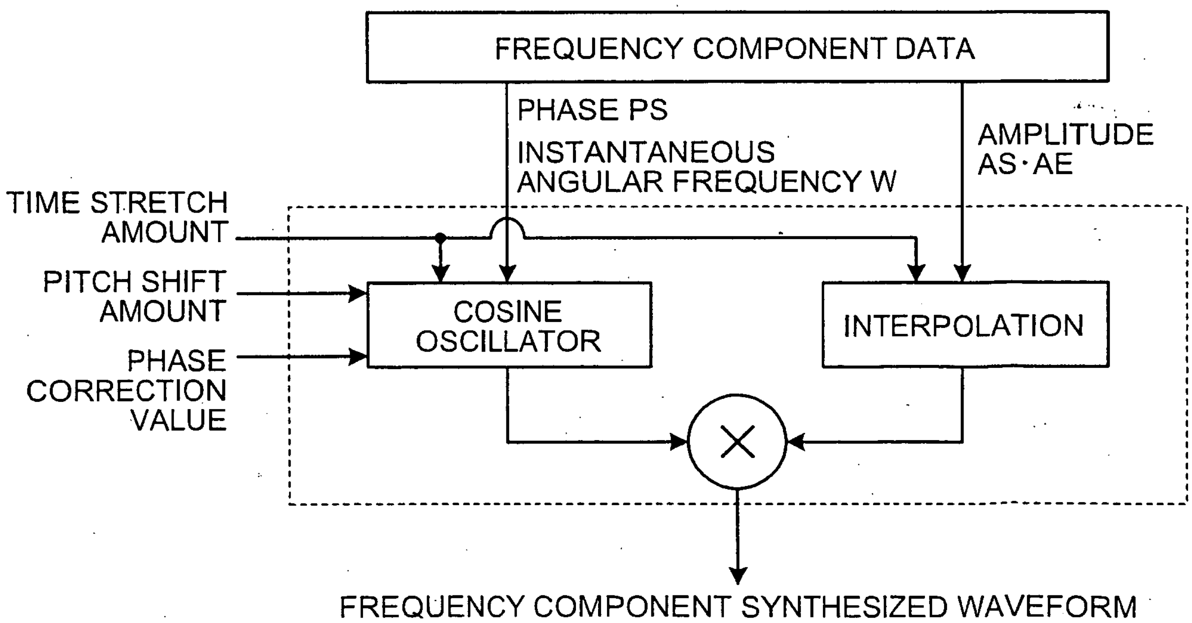
FREQUENCY COMPONENT DATA
PHASE PS
INSTANTANEOUS
ANGULAR FREQUENCY W
AMPLITUDE
AS·AE
TIME STRETCH
AMOUNT
PITCH SHIFT
AMOUNT
PHASE
CORRECTION
VALUE
COSINE
OSCILLATOR
INTERPOLATION
FREQUENCY COMPONENT SYNTHESIZED WAVEFORM

FIG.23

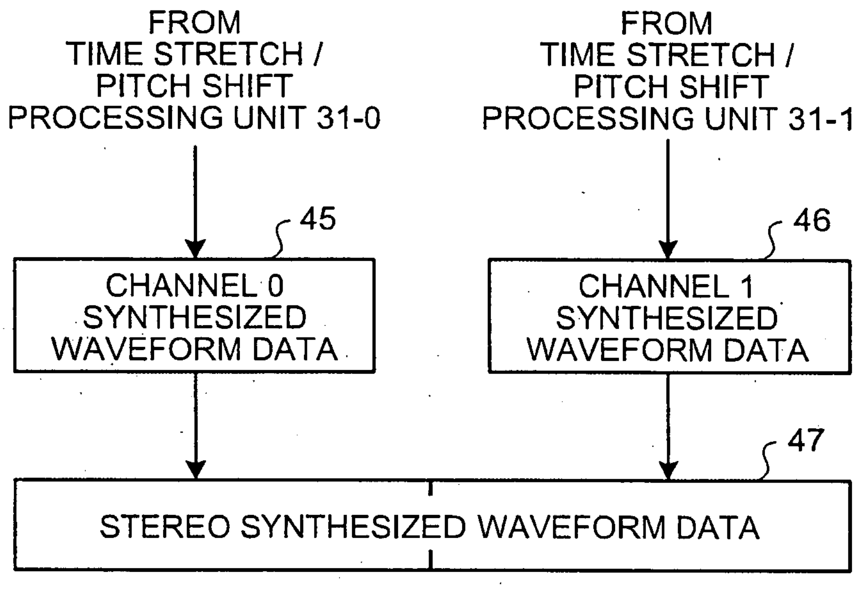
FROM
TIME STRETCH /
PITCH SHIFT
PROCESSING UNIT 31-0
FROM
TIME STRETCH /
PITCH SHIFT
PROCESSING UNIT 31-1
45
46
CHANNEL 0
SYNTHESIZED
WAVEFORM DATA
CHANNEL 1
SYNTHESIZED
WAVEFORM DATA
47
STEREO SYNTHESIZED WAVEFORM DATA

FIG.24

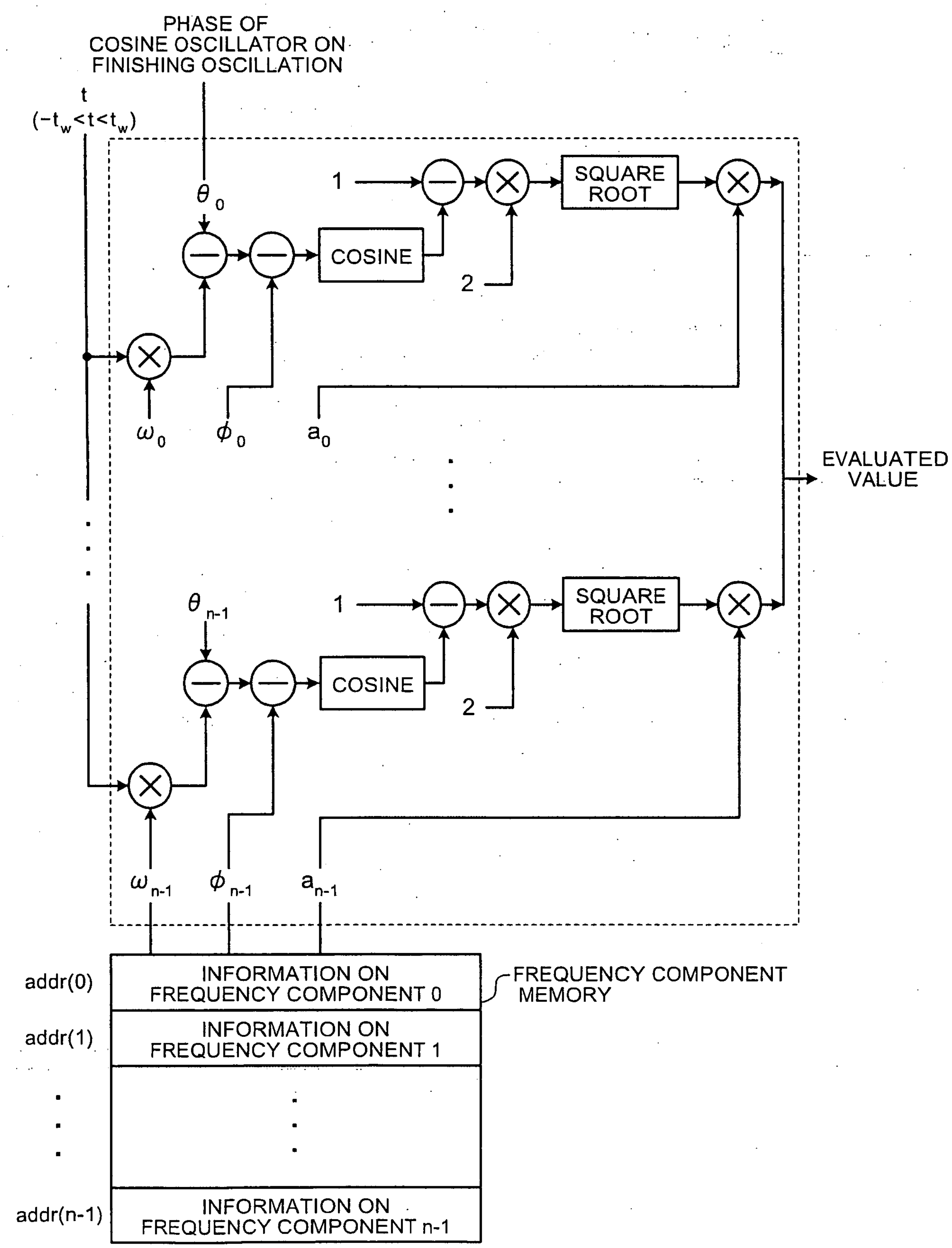
PHASE OF
COSINE OSCILLATOR ON
FINISHING OSCILLATION
t
(−tw<t<tw)
θ0
θn-1
1
2
COSINE
SQUARE ROOT
ω0
φ0
a0
ωn-1
φn-1
an-1
EVALUATED VALUE
addr(0)
addr(1)
addr(n-1)
INFORMATION ON FREQUENCY COMPONENT 0
INFORMATION ON FREQUENCY COMPONENT 1
INFORMATION ON FREQUENCY COMPONENT n-1
FREQUENCY COMPONENT MEMORY

FIG.25

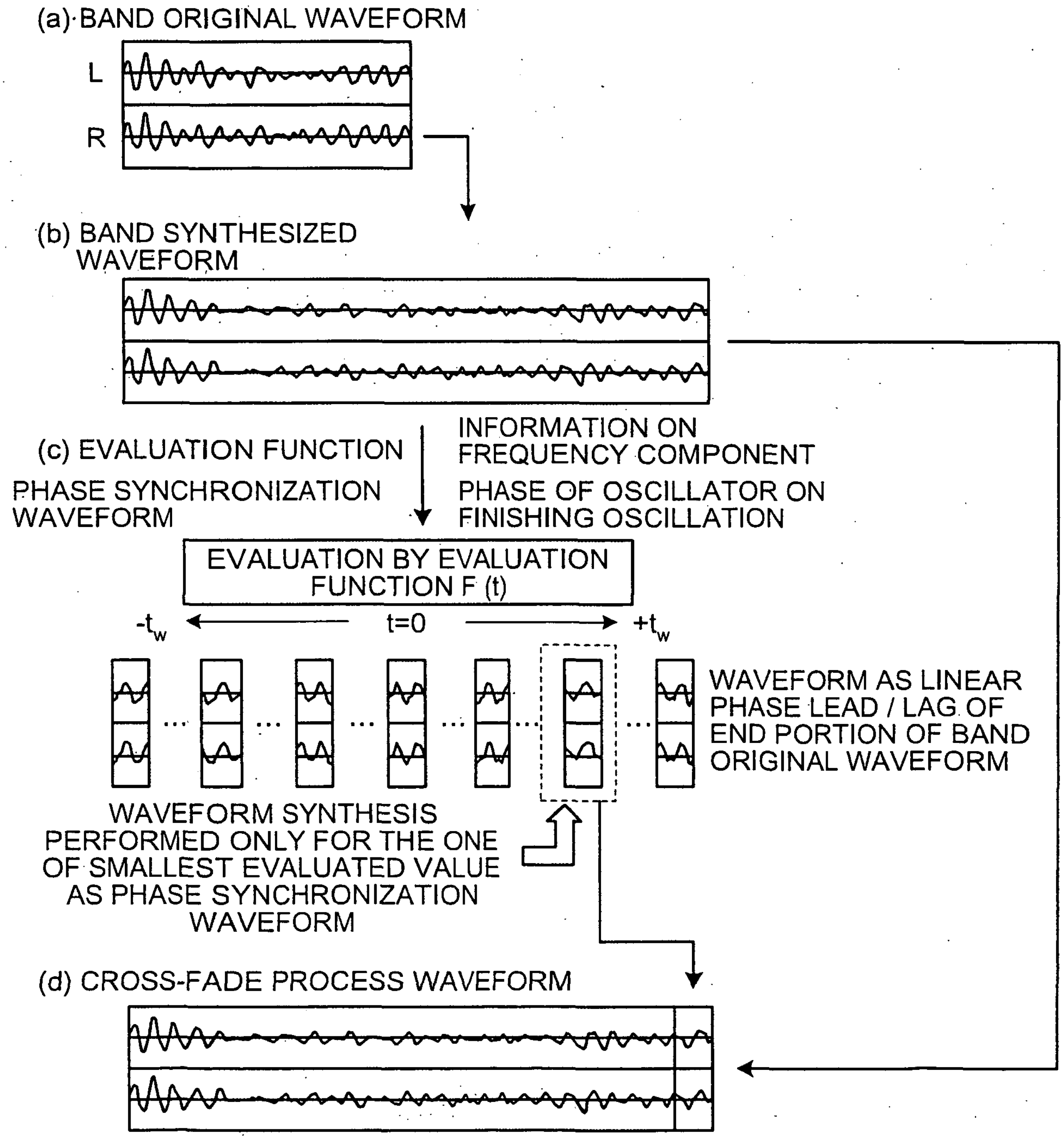
(a) BAND ORIGINAL WAVEFORM
L
R
(b) BAND SYNTHESIZED WAVEFORM
(c) EVALUATION FUNCTION
PHASE SYNCHRONIZATION WAVEFORM
INFORMATION ON FREQUENCY COMPONENT
PHASE OF OSCILLATOR ON FINISHING OSCILLATION
EVALUATION BY EVALUATION FUNCTION F (t)
-$t_w$
t=0
+$t_w$
WAVEFORM AS LINEAR PHASE LEAD / LAG OF END PORTION OF BAND ORIGINAL WAVEFORM
WAVEFORM SYNTHESIS PERFORMED ONLY FOR THE ONE OF SMALLEST EVALUATED VALUE AS PHASE SYNCHRONIZATION WAVEFORM
(d) CROSS-FADE PROCESS WAVEFORM

FIG.26

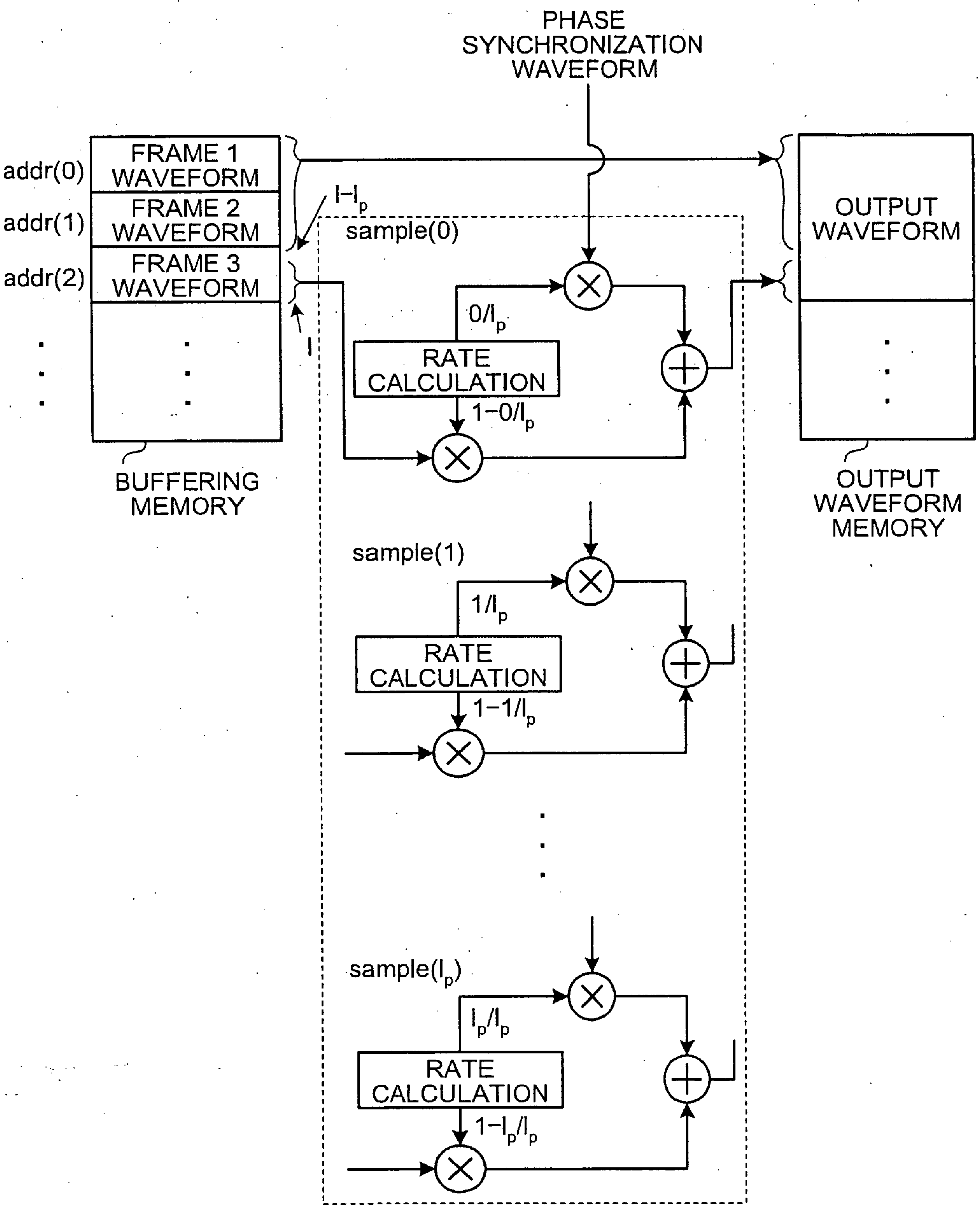
PHASE SYNCHRONIZATION WAVEFORM
addr(0)
addr(1)
addr(2)
FRAME 1 WAVEFORM
FRAME 2 WAVEFORM
FRAME 3 WAVEFORM
BUFFERING MEMORY
l-l_p
l
sample(0)
0/l_p
RATE CALCULATION
1−0/l_p
sample(1)
1/l_p
RATE CALCULATION
1−1/l_p
sample(l_p)
l_p/l_p
RATE CALCULATION
1−l_p/l_p
OUTPUT WAVEFORM
OUTPUT WAVEFORM MEMORY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001117595 A


### Non-patent literature cited in the description


- **BORCHERS et al.** *Personal orchestra: conducting audio/video music recordings*